# EUROPÄISCHE PATENTSCHRIFT

(11) **EP 0 910 531 B1**
(45) Veröffentlichungstag und Bekanntmachung des Hinweises auf die Patenterteilung: **29.12.1999**
(21) Anmeldenummer: 97931799.7
(22) Anmeldetag: 08.07.1997
(51) Int. Cl.: B62M 23/02, B62K 21/00, B62K 15/00, B62J 17/08, B62K 25/04

(54) **EINSPURIGES ZWEIRAD**
SINGLE TRACK TWO-WHEELED VEHICLE
DEUX ROUES A VOIE UNIQUE

(30) Priorität: 09.07.1996 DE 19627557; 08.03.1997 DE 19710950
(43) Veröffentlichungstag der Anmeldung: 28.04.1999
(73) Patentinhaber: GRIMM, Friedrich, 70192 Stuttgart (DE)
(72) Erfinder: GRIMM, Friedrich, 70192 Stuttgart (DE)
(74) Vertreter: Vogler, Silvia
(86) Internationale Anmeldenummer: EP9703603
(87) Internationale Veröffentlichungsnummer: WO9801334

(56) Entgegenhaltungen:
- EP-A- 0 258 509
- WO-A-93/21055
- DE-C- 79 225
- DE-C- 98 366
- DE-C- 117 016
- FR-A- 982 683
- FR-A- 2 531 025
- US-A- 4 516 647
- US-A- 5 450 915

## Beschreibung

Die Erfindung betrifft ein einspuriges Zweirad nach dem Oberbegriff des Anspruchs 1. Ein derartiges Zweirad ist aus der Druckschrift DE 98366 C bekannt.

Nach den Regeln der Technik besitzen die meisten einspurigen Zweiräder - ob es sich dabei um Fahrräder, Motorräder oder Motorroller handelt - eine Lenkgeometrie mit einem Nachlauf des Vorderrades. Dabei hat die Verlängerung der Schwenkachse, die den hinteren Rahmenteil mit der Vordergabel und der Lenkstange verbindet, einen Schnittpunkt mit der Fahrbahn, der einige Zentimeter vor dem Aufstandspunkt des Vorderrades liegt. Dieser Nachlauf bewirkt einen stabilen Geradeauslauf des Zweirades. Jedes Lenksystem für einspurige Zweiräder hat über die Radauf
standsflächen von Vorder- und Hinterrad zwei Kontaktflächen mit der Fahrbahn. Bei herkömmlichen Zweirädern wird durch die Betätigung der Lenkstange, die mit Gabel und Vorderrad unverdrehbar verbunden ist, das Zweirad gelenkt. Eine weitere die Fahrstabilität beeinflussende Vorkehrung ist ein Versatz zwischen Schwenkachse und Vorderradachse. Dieser Versatz bewirkt bei einem Lenkeinschlag ein geringfügiges Heben des Gabelkopfes, wodurch Rückstellkräfte hervorgerufen werden, die zu einem stabilen Geradeauslauf des Zweirades beitragen. Bei der Kurvenfahrt ist eine Gewichtsverlagerung des Fahrers und eine Neigung des Zweirades erforderlich, um gegenüber der Ausgangsposition einen neuen Gleichgewichtszustand herzustellen. Die Gleichgewichtslage ist dabei abhängig von dem Lenkeinschlag des Vorderrades gegenüber dem Hinterrad, der gefahrenen Geschwindigkeit und dem Gewicht des Fahrers. Die außermittige Anordnung der gemeinsamen Schwenkachse von vorderer und hinterer Rahmeneinheit ermöglicht zwar eine problemlose Lenkbarkeit eines einspurigen Zweirades, sie ist aber auch mit Problemen behaftet.

Durch die asymmetrische Anordnung der Schwenkachse bei einem einspurigen Zweirad herkömmlicher Bauart nehmen bei der Kurvenfahrt Vorder- und Hinterrad eine unterschiedliche Neigung zur Fahrbahn ein. Dies hat u.a. zur Folge, daß bei der Lenkung unnötige Reibungsverluste entstehen, die sich z.B. an einer ungleichmäßigen Abnutzung der Laufflächen von Vorder- und Hinterrad zeigen. Ein weiterer die Fahrsicherheit beeinträchtigender Aspekt betrifft die Radstellung in Kurven. In einer Kurve nimmt weder das Vorderrad noch das Hinterrad eine für das Durchfahren der Kurve ideale Stellung ein. Optimal ist eine tangential zum Bogen verlaufende Radstellung mit gleicher Neigung beider Räder. Kurvenfahrten mit herkömmlichen Zweirädern sind deshalb insbesondere auf rutschiger Fahrbahn mit einer Sturzgefahr verbunden. Bei mangelnder Haftreibung zwischen Rädern und Fahrbahn führt der allein auf das Vorderrad ausgeübte Lenkeinschlag zum Wegrutschen des Vorderrades und damit zum Sturz. Beschleunigen und Bremsen in der Kurve kann ein Abrutschen des Hinterrades auslösen und ebenfalls einen Sturz verursachen. Ein weiterer Nachteil herkömmlicher Fahrräder zeigt sich an Steigungen. Hier führen die erforderlichen höheren Pedalkräfte zu Ausgleichsreaktionen an der Lenkstange, durch die das Vorderrad wechselseitig ausgelenkt wird. Dies führt einerseits zu einer von der Geradeausfahrt abweichenden Spur und andererseits zu einer erhöhten Reibung zwischen Vorderrad und Fahrbahn. Die ungleichmäßige Gewichtsverteilung auf Vorder- und Hinterrad durch den asymmetrischen Aufbau des Rahmens bei herkömmlichen Zweirädern führt zu zusätzlichen Belastungen des Rahmens, die z.B. von einer torsionssteifen Konstruktion aufgenommen werden müssen.

Ein einspuriges Zweirad der im Oberbegriff des Anspruchs 1 genannten Art ist durch die deutsche Patentschrift DE 98366 C bekannt.

Dort wird ein einspuriges Zweirad mit einer zwischen Vorder- und Hinterrad gelegenen Schwenkachse, die nach vorne geneigt ist und von der Mitte ausgehend nach vorne verschoben ist, dargestellt.

Bei diesem Zweirad ist das die Lenkstange tragende Verbindungselement drehbar im vorderen Rahmenteil gelagert. Lenkbewegungen an der Lenkstange werden über zwei kreissegmentförmigen Zahnbögen auf den hinteren Rahmenteil übertragen. Bei dieser Anordnung ist es nicht möglich, den vorderen und den hinteren Rahmenteil gleichmäßig auszulenken. Die drehbare Lagerung der Lenkstange im vorderen Rahmenteil schließt aus, daß die Lenkbewegungen unmittelbar vom vorderen auf den hinteren Rahmenteil übertragen werden.

Durch die französische Patentschrift 982.683 ist ein Fahrrad bekanntgeworden, das auf einfache Weise zu einem Karren umgebaut werden kann. Entsprechend seiner Aufgabenstellung besitzt dieses Rad zwei vertikale Achsen, die links und rechts von einem mittleren Rahmenteil angeordnet sind und die es erlauben, den vorderen und den rückwärtigen Rahmenteil um 90° zu verschwenken, so daß ein einachsiger, zweispuriger Karren entsteht. Hier ist die Ausbildung einer mittigen Schwenkachse ausgeschlossen. Die Lenkung wirkt nicht auf beide Räder gleichmäßig ein.

Eine aktuelle Entwicklung stellt das FLEVO-Bike dar, das in der Zeitschrift 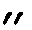 radfahren EXTRA" 4.92 dargestellt ist. Auch dieses Rad besitzt ein Gelenk in etwa mittiger Stellung zwischen Vorder-und Hinterrad. Dieses Gelenk ist jedoch so stark nach hinten geneigt, daß die Schwenkachse vor dem Radaufstandspunkt des Vorderrades die Fahrbahn schneidet. Die Fahrstabilität bei diesem Rad wird also über einen Nachlauf bewirkt. Zudem bilden die Pedale eine unverdrehbare Einheit mit dem vorderen Rahmenteil, so daß die Lenkfähigkeit eines derartigen Liegerades extrem eingeschränkt ist.

### Aufgabenstellung

Ausgehend von dem dargestellten Stand der Technik, liegt der Erfindung die Aufgabe zugrunde, ein einspuriges Zweirad gemäß dem Oberbegriff des Anspruchs 1 so weiterzuentwickeln, daß die Lenkung gleichmäßig auf beide Räder einwirkt. Diese Aufgabe wird mit den Merkmalen des Anspruchs 1 gelöst. Bei dem Zweirad der Erfindung ist ein Zusammenwirken von drei Lenkhebeln erforderlich, über die die Bewegungen des Drehgelenkes in der Schwenkachse beeinflußt werden können, wobei der Begriff 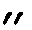 Lenkhebel" für das Lenkungsprinzip steht:
- ein erster oberer Lenkhebel, der mit der vorderen Radaufhängung eine in sich unverdrehbare Einheit bildet und von vorne auf die Gelenkanordnung einwirkt,
- ein zweiter oberer Lenkhebel, der mit der hinteren Radaufhängung eine unverdrehbare Einheit bildet und von hinten auf die Gelenkanordnung einwirkt
- und ein unterer Lenkhebel, der ebenfalls mit der hinteren Radaufhängung eine unverdrehbare Einheit bildet und entweder vor, in oder hinter der Gelenkanordnung wirksam ist.

Der vordere obere Lenkhebel wird von dem nach vorne gerichteten Versatz der Lenkstange zur Gelenkanordnung gebildet.
Der hintere obere Lenkhebel wird von dem nach hinten gerichteten Versatz der Sattelstütze zur Gelenkanordnung gebildet.
Der untere Lenkhebel wird von dem Versatz der Pedale bzw. starren Fußrasten zur Gelenkanordnung gebildet. Der Angriffspunkt des unteren Lenkhebels liegt immer zwischen Lenkstange und Sattelstütze.

Man erkennt, daß die Erfindung immer dann verwirklicht ist, wenn die Krafteinleitungspunkte der Lenkhebel ein auf der Spitze stehendes Dreieck bilden, in dessen unterer Ecke die Pedale liegen und dessen obere Ecken von der Lenkstange und dem Sattel markiert werden. Die Schwenkachse der Gelenkanordnung durchschneidet dieses Dreieck zwischen den oberen Ecken.

Durch die sich wechselseitig beeinflussenden Lenkhebel wird eine sichere Lenkbarkeit und eine extrem hohe Wendigkeit eines einspurigen Zweirades mit Mittelgelenk ermöglicht. Das vorgeschlagene Knick-Neige-Lenk-System führt für alle gattungsgemäßen Zweiräder der eingangs genannten Art zu einem grundlegend neuen Fahrverhalten, das sich gegenüber dem Stand der Technik bei Zweirädern durch eine Reihe von Vorteilen auszeichnet, die im Folgenden näher erläutert werden. Darüber hinaus kann der konstruktive Aufwand beim Bau einspuriger Zweiräder gegenüber dem Stand der Technik erheblich reduziert werden, so daß Gewichtseinsparungen möglich sind und auch die Herstellung von Klapp- und Falträdern stark vereinfacht wird. Ein besonderer Vorteil von Rädern, bei denen die vordere und die hintere Einheit an der Gelenkanordnung entweder senkrecht oder horizontal gegeneinander versetzt angeschlossen sind, besteht darin, daß beide Teile um die Gelenkanordnung so gegeneinander verschwenkt werden können, daß das Rad auf seine halbe Länge zusammenklappbar ist, wobei die Teile dicht aneinander liegen. Weitere Vorteile ergeben sich durch die Integration einer Mehrgangschaltung und einer Rücktrittbremse, eines elektrischen oder motorischen Antriebs in einen Rahmen mit Mittelgelenk.

Weitere vorteilhafte Ausbildungen der Erfindung sind in den Unteransprüchen niedergelegt.

### Konstruktion

Die mittige Stellung der Gelenkanordnung zwischen Vorder- und Hinterrad erlaubt es, das Gewicht des Fahrers auf kurzem Weg zu den Radachsen abzuleiten. Zudem können die Tragelemente im Vergleich zu herkömmlichen Rahmenkonstruktionen kompakter ausgeführt werden, was den konstruktiven Aufwand verringert und Gewichtseinsparungen ermöglicht. Der Rahmen eines erfindungsgemäßen einspurigen Zweirads besteht beispielsweise aus zwei Dreiecken, die mit der Schwenkachse eine gemeinsame Seite haben. Bei einigen Ausführungsvarianten sind die beiden Dreiecke zur Aufhängung von Vorder- und Hinterrad identisch ausgebildet, was die Herstellung des Rahmens zusätzlich vereinfacht. Die Ableitung der Lasten aus statischer und dynamischer Beanspruchung über ein System aus zwei Dreiecken stellt aus konstruktiver Sicht ein Optimum dar und erlaubt die Ausbildung einer leichten Konstruktion.
In der reduziertesten Ausführungsform besteht der Zweiradrahmen aus zwei geraden oder gebogenen Biegeprofilen als Radaufhängungen, die in der Gelenkanordnung schwenkbar miteinander verbunden sind. Der Lenkhebel bildet mit der vorderen Radaufhängung eine in sich unverdrehbare Einheit, während die hintere Radaufhängung mit der Sattelstütze und einem unteren Lenkhebel eine weitere in sich unverdrehbare Einheit bildet. Die Stellung der Gelenkanordnung erlaubt einerseits ein mittiges, platzsparendes Zusammenklappen erfindungsgemäßer Zweiräder und andererseits die Konstruktion eines faltbaren Rohrrahmens. Biegebeanspruchte Bauformen sowie zug- und druckbeanspruchte räumliche Fachwerke für die vordere und hintere Einheit können in nur einem Gelenk umeinander drehbar gelagert werden, was den konstruktiven Aufwand zusätzlich reduziert. Dabei besteht das Drehgelenk aus einem Führungsrohr, das mit einer der beiden Einheiten unverdrehbar verbunden ist, während es mit der zweiten Einheit über ein oberes und ein unteres Wälzlager in Verbindung steht. Die Ausbildung eines oberen und eines unteren Gelenkpunktes in der Gelenkanordnung reduziert die an der Gelenkanordnung wirkenden Kräfte und erlaubt leichtere Bauformen. Insbesondere bei Fahrzeugen, bei denen das Drehgelenk auf Höhe oder unterhalb der Radachsen angeordnet ist, können die am Gelenkpunkt wirksamen Torsionskräfte über ein scheibenförmig erweitertes Gelenk abgetragen werden. In einem Motorroller bildet ein derartiges Gelenk den Boden des Fahrzeuges; der untere Lenkhebel ist hier zu einem Trittbrett erweitert. Schließlich kann die hintere Einheit eine teilweise oder vollständig transparente Hülle aufnehmen, die den Fahrer vor Wind und Regen schützt.

### Fahreigenschaften

Verlegt man die Gelenkanordnung einspuriger Zweiräder in eine mittlere Position zwischen den Laufflächen von Vorder- und Hinterrad, ändert sich das Fahrverhalten eines Zweirads grundsätzlich. Durch eine Betätigung des Lenkhebels wird nicht nur das Vorderrad bewegt, sondern Vorder- und Hinterrad werden gleichmäßig aus der Grundstellung, in der die Längsmittelachsen von Vorder- und Hinterrad auf einer Geraden liegen, ausgelenkt. Dabei verkürzt sich die Strecke zwischen den Aufstandsflächen von Vorder- und Hinterrad, und der Rahmen knickt entlang der Schwenkachse ein. Der Gleichgewichtszustand in einer Kurve ist nur durch eine der Fahrtgeschwindigkeit entsprechende Neigung der Schwenkachse radial zum Kurvenbogen möglich.
Bei der Kurvenfahrt sind beide Räder tangential zum Bogen der durchfahrenen Kurve ausgerichtet. Dadurch werden die Reibungsverluste minimiert und beide Radmantelflächen werden gleichmäßig beansprucht. Das Gewicht des Fahrers verteilt sich zu gleichen Teilen auf die Aufstandsflächen der Räder. Ein weiterer entscheidender Vorteil des Knick-Neige-Lenk-Systems besteht darin, daß beim Durchfahren einer Kurve gegenüber der Frontlenkung ein nur halb so großer Lenkeinschlag notwendig ist, weil sich das Winkelmaß der Richtungsänderung auf beide Räder gleichmäßig verteilt. Die Lenkung wird durch Ziehen bzw. auch durch Drücken am vorderen Lenkhebel, auf der der beabsichtigten Richtungsänderung zugewandten Seite ausgelöst. Durch Gewichtsverlagerung werden die den Geradeauslauf herbeiführenden Rückstellkräfte überwunden, das Zweirad knickt ein, wobei sich die Schwenkachse neigt und sich ein neuer Gleichgewichtszustand aufbaut. Dieser labile Gleichgewichtszustand wird beim Fahren durch die Krafteinwirkung des Fahrers an fünf Krafteinleitungspunkten stabilisiert: nämlich der rechte und linke Haltegriff der Lenkstange, der Sattel, das linke Pedal und das rechte Pedal. Die gleichzeitige Krafteinleitung an allen genannten Punkten bewirkt eine stabile Lage des einspurigen Zweirades in jeder Fahrsituation. Das fünfpunktgestützte Knick-Neige-Lenk-System stellt einen sicheren und leicht zu beherrschenden Lenkmechanismus für einspurige Zweiräder mit mittiger Schwenkachse dar. Die Wirksamkeit des unteren Lenkhebels wird durch eine Gangschaltung wesentlich verbessert, da die Pedalkräfte dadurch regulierbar sind. Eine ruhige und präzise Geradeausfahrt erreicht der Fahrer durch ein intuitives Ausbalancieren der über die Pedale eingetragenen Lenkkräfte am vorderen Lenkhebel. Beim Anfahren wird das vom Pedal bewirkte Drehmoment in der Schwenkachse durch einen entsprechenden Gegendruck am Lenkhebel kompensiert. Dabei gilt: je kleiner die Auslenkung, desto geringer der für die Lenkung erforderliche Kraftaufwand. Es ist auch möglich, sich aus dem Sattel aufzurichten und im Stehen bzw. im Wiegetritt zu fahren. An Steigungen bewirken die höheren Pedalkräfte am unteren Lenkhebel einen präzisen, ruhigen Geradeauslauf. An Gefällstrecken, wo hohe Geschwindigkeiten gefahren werden, ist es ratsam, durch eine leichte Betätigung der Rücktrittbremse, ein Moment in die Schwenkachse einzutragen, so daß vorderer und hinterer Lenkhebel unter Spannung stehen, wodurch die Gefahr von Lastwechselreaktionen in der Schwenkachse, die bei hohen Geschwindigkeiten unangenehm sein können, vollkommen vermieden wird. Dasselbe gilt für ein Motorrad oder einen Motorroller, wo der Fahrer mit den Händen und den Füßen die Lenkung beeinflussen kann. Durch einen schalenförmigen Sitz, der einen guten Seitenhalt gewährleistet, ist ein vollkommen sicheres Fahren auch bei extremen Geschwindigkeiten möglich.

Im Geradeauslauf befindet sich die Gelenkanordnung in einem unteren Totpunkt. Durch jede Lenkbewegung verkürzt sich der Radstand und die Gelenkanordnung wird angehoben. In der Kurvenfahrt befindet sich die Gelenkanordnung also auf einem höheren Niveau. Die für einen stabilen Geradeauslauf erforderlichen Rückstellkräfte ergeben sich daraus, daß das System stets bestrebt ist, den Ausgangszustand wieder einzunehmen. Eine zusätzliche Beeinflussung der Fahreigenschaften innerhalb dieses zwangsläufigen Knick-Neige-Mechanismus kann durch eine Neigung der Schwenkachse in Längsrichtung oder dadurch, daß die vordere und hintere Radaufhängung mit einem Versatz an die Radachsen angreifen, bewirkt werden. Die Lenkbewegungen in der Schwenkachse können durch einen Lenkungsdämpfer z.B. in Form einer Gasdruckfeder, die den hinteren Teil mit dem vorderen Teil verbindet, beeinflußt werden. Der Widerstand dieses Dämpfungselementes muß bei jeder Lenkbewegung überwunden werden. Eine weitere Möglichkeit zur Beeinflussung der Lenkeigenschaften sind Federelemente, die an der Gelenkanordnung angreifen und deren Rückstellkraft bei jeder vom Geradeauslauf abweichenden Lenkbewegung überwunden werden muß. Schließlich kann die Gelenkanordnung so weitergebildet werden, daß sich beim Lenken die vordere und die hintere Radaufhängung über Gleitflächen mit gegensinniger Steigung entlang der Schwenkachse auseinanderbewegen, wodurch ebenfalls eine zusätzliche Rückstellkraft hervorgerufen werden kann.

Der Antrieb kann entweder auf das Vorderrad oder auf das Hinterrad oder auch auf beide Räder einwirken. Im Rahmen der Erfindung ist von Bedeutung, welche Lage der Antrieb gegenüber der Schwenkachse einnimmt. Für die Anordnung von Verbrennungsmotoren, Elektromotoren und Batteriespeicher ergeben erfindungsgemäß neue und vorteilhafte Möglichkeiten, die in der Figurenbeschreibung näher erläutert werden.

Zusammenfassend läßt sich sagen, daß ein einspuriges Zweirad mit einer Lenkvorrichtung, die beide Räder gleichmäßig beeinflußt, aufgrund der idealen Abstützung gegenüber der Fahrbahn herkömmlichen Lösungen überlegen ist. Ein bisher ungelöstes Problem stellte die sichere und einwandfreie Lenkbarkeit eines derartigen Zweirades in allen Fahrsituationen dar. Durch die Anordnung und das Zusammenwirken der in der vorliegenden Erfindung vorgeschlagenen Lenkhebel und deren Verkörperung wird dieses Problem auf einfachste Weise gelöst.

Die Erfindung wird anhand von verschiedenen, in den Zeichnungen schematisch dargestellten Ausführungsbeispielen näher erläutert. Es zeigt:
- Fig. 1: ein erfindungsgemäßes Fahrrad mit Hinterradantrieb und senkrechter Gelenkanordnung in isometrischer Darstellung.
- Fig. 2a: ein erfindungsgemäßes Fahrrad mit Hinterradantrieb und senkrechter Gelenkanordnung in der Ansicht.
- Fig. 2b: ein erfindungsgemäßes Fahrrad mit Hinterradantrieb und senkrechter Gelenkanordnung in der Aufsicht.
- Fig. 2c: ein erfindungsgemäßes Fahrrad mit Hinterradantrieb und senkrechter Gelenkanordnung zusammengeklappt in der Aufsicht.
- Fig. 3: ein erfindungsgemäßes Fahrrad mit Hinterradantrieb und senkrechter Gelenkanordnung in der Ansicht.
- Fig. 4: ein erfindungsgemäßes Fahrrad mit Hinterradantrieb und senkrechter Gelenkanordnung in der Ansicht.
- Fig. 5a: einen erfindungsgemäßen Elektroroller mit Frontantrieb und senkrechter Schwenkachse in der Ansicht.
- Fig. 5b: einen erfindungsgemäßen Elektroroller mit Frontantrieb und senkrechter Schwenkachse in der Aufsicht.
- Fig. 6: einen erfindungsgemäßen Motorroller mit Hinterradantrieb und senkrechter Gelenkanordnung in der Ansicht.
- Fig. 7: einen erfindungsgemäßen Motorroller mit Frontantrieb und senkrechter Gelenkanordnung in isometrischer Darstellung.
- Fig. 8: ein erfindungsgemäßes Fahrrad mit Hinterradantrieb und senkrechter Gelenkanordnung in der Ansicht.
- Fig. 9: ein erfindungsgemäßes Fahrrad mit Hinterradantrieb und senkrechter Gelenkanordnung in der Ansicht.
- Fig. 10: ein erfindungsgemäßes Fahrrad mit Hinterradantrieb und senkrechter Gelenkanordnung in der Ansicht.
- Fig. 11: ein erfindungsgemäßes Fahrrad mit Hinterradantrieb und senkrechter Gelenkanordnung in der Ansicht.
- Fig. 12: ein erfindungsgemäßes Fahrrad mit Hinterradantrieb und nach hinten geneigter Gelenkanordnung in der Ansicht.
- Fig. 13: ein erfindungsgemäßes Fahrrad mit Hinterradantrieb und nach vorne geneigter Gelenkanordnung in der Ansicht.
- Fig. 14: ein erfindungsgemäßes Fahrrad mit Hinterradantrieb und senkrechter Gelenkanordnung in der Ansicht.
- Fig. 15: ein erfindungsgemäßes Fahrrad mit Hinterradantrieb und nach hinten geneigter Gelenkanordnung in der Ansicht.
- Fig. 16: ein erfindungsgemäßes Elektrorad mit Vorder- und Hinterradantrieb und senkrechter Gelenkanordnung in der Ansicht.
- Fig. 17: ein erfindungsgemäßes Klappfahrrad mit Hinterradantrieb und senkrechter Gelenkanordnung in isometrischer Darstellung.
- Fig. 18: ein erfindungsgemäßes Faltrad mit Hinterradantrieb und senkrechter Gelenkanordnung in der Ansicht.
- Fig. 19a: einen Rohrrahmen für ein erfindungsgemäßes Faltrad in entfalteter Stellung.
- Fig. 19b: einen Rohrrahmen für ein erfindungsgemäßes Faltrad in zusammengefalteter Stellung.
- Fig. 20a: ein erfindungsgemäßes Faltrad in fahrbereitem Zustand in der Ansicht.
- Fig. 20b: ein erfindungsgemäßes Faltrad in zusammengefalteter Stellung.
- Fig. 21: ein erfindungsgemäßes Elektrorad mit Frontantrieb und senkrechter Gelenkanordnung in der Ansicht.
- Fig. 22: einen erfindungsgemäßen Elektroroller mit Frontantrieb und senkrechter Gelenkanordnung in der Ansicht.
- Fig. 23: ein erfindungsgemäßes Motorrad mit Hinterradantrieb und senkrechter Gelenkanordnung in der Ansicht.
- Fig. 24: einen erfindungsgemäßen Elektroroller mit geschlossener Kabine und Stützrädern in der Ansicht.
- Fig. 24a: den Elektroroller aus Fig. 24 ohne Kabine in isometrischer Darstellung.
- Fig. 25: ein erfindungsgemäßes Klapprad mit Hinterradantrieb und senkrechter Gelenkanordnung in der Ansicht.
- Fig. 25a: das Klapprad aus Fig. 25 in perspektivischer Darstellung.
- Fig. 26: ein erfindungsgemäßes Klapprad mit Hinterradantrieb und senkrechter Gelenkanordnung in der Ansicht.
- Fig. 26a: das Klapprad aus Fig. 26 in perspektivischer Darstellung
- Fig. 27: ein erfindungsgemäßes Klapprad mit Hinterradantrieb und senkrechter Gelenkanordnung in der Ansicht.
- Fig. 27a: das Klapprad aus Fig. 27 in perspektivischer Darstellung.
- Fig. 28: ein erfindungsgemäßes Damenfahrrad mit Hinterradantrieb und senkrechter Gelenkanordnung in der Ansicht.
- Fig. 28a: das Damenfahrrad aus Fig. 28 in perspektivischer Darstellung.
- Fig. 29: ein erfindungsgemäßes Damenfahrrad mit Hinterradantrieb und senkrechter Gelenkanordnung in isometrischer Darstellung.
- Fig. 30: ein erfindungsgemäßes Elektrorad mit Vorderradantrieb und nach hinten geneigter Gelenkanordnung in isometrischer Darstellung.
- Fig. 31: ein erfindungsgemäßes Elektrorad mit Vorder- und Hinterradantrieb und senkrechter Gelenkanordnung in isometrischer Darstellung.
- Fig. 32: ein erfindungsgemäßes Elektrorad mit Vorderradantrieb und senkrechter Gelenkanordnung in isometrischer Darstellung.

In den Figuren sind einspurige Zweiräder, insbesondere Fahrräder, Elektroräder, Elektroroller oder Motorroller dargestellt, bestehend aus einem vorderen Teil und einem hinteren Teil, die beide mittels einer sich in etwa mittiger Stellung zwischen Vorder- und Hinterrad angeordneten Gelenkanordnung verschwenkbar miteinander verbunden sind, wobei der vordere Teil eine vordere Radaufhängung mit dem Vorderrad, eine gegenüber der Gelenkanordnung nach vorne versetzte Lenkstange und ein Verbindungselement der Lenkstange umfaßt, und der hintere Teil eine Hinterradaufhängung mit dem Hinterrad und eine den Sattel tragende Sattelstütze umfaßt, und eine Antriebseinheit vorgesehen ist, die entweder zum vorderen Teil oder zum hinteren Teil gehört. Dabei ist in jeder Figur erkennbar, daß die vordere Radaufhängung (31,33,35,37) und das die Lenkstange (21) tragende Verbindungselement (21') eine in sich unverdrehbare erste Einheit bilden, und daß die hintere Radaufhängung (30,32,34,36) und die Sattelstütze (26') eine in sich unverdrehbare zweite Einheit bilden, wobei der Sattel (26) gegenüber der Gelenkanordnung (1-4) nach hinten versetzt ist, und die Antriebseinheit (40-50) entweder auf das Vorderrad (11) oder auf das Hinterrad (10) einwirkt.

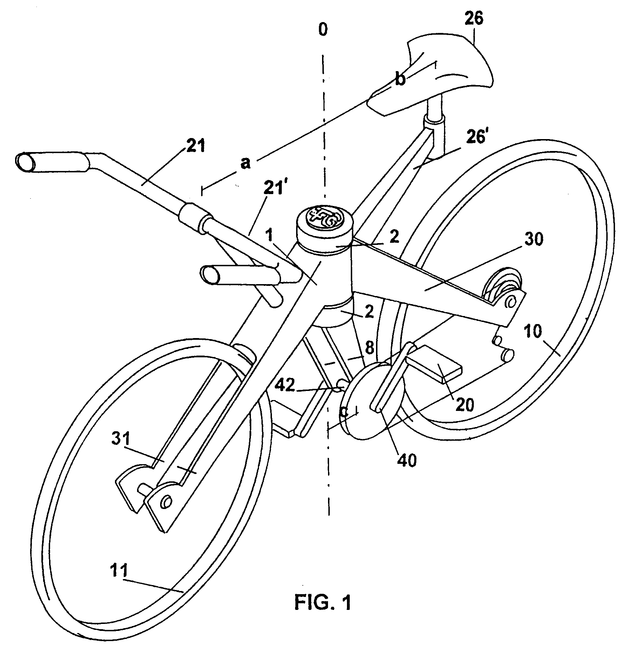

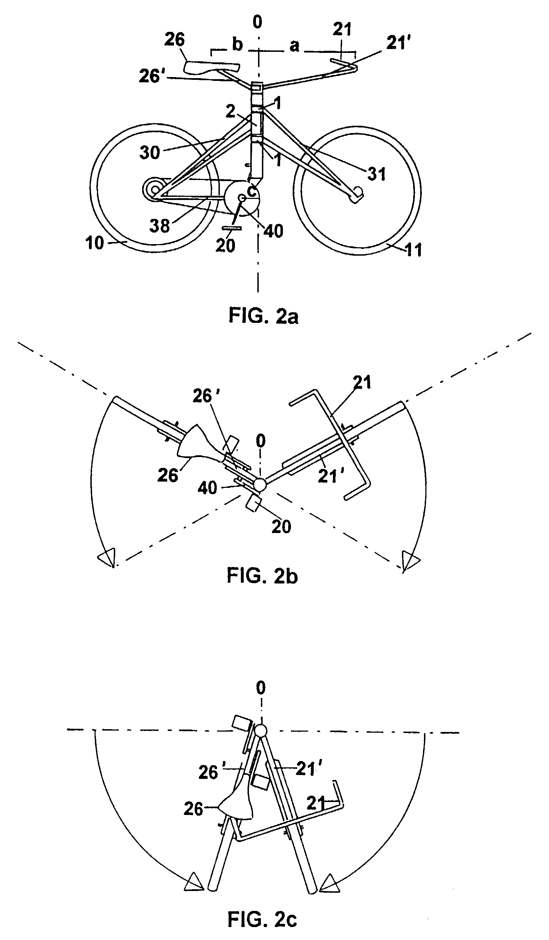

Fig. 1 zeigt eine isometrische Übersicht eines erfindungsgemäßen Fahrrads. Hier besteht die vordere Einheit aus der Lenkstange (21), dem Verbindungselement (21') und der Gabel (31), während die hintere Einheit aus dem Sattel (26), der Sattelstütze (26'), der Gabel (30) und einem Kragarm zur Aufnahme des Tretlagers (42) zusammengesetzt ist. Beide in sich unverdrehbaren Einheiten sind in der Gelenkanordnung umeinander drehbar gelagert. Die Gelenkanordnung wird durch ein oberes Drehgelenk (1,2), das oberhalb der Radachsen von Vorderrad (11) und Hinterrad (10) angeordnet ist, definiert. Die Pedale (20) liegen unterhalb der Radachsen und wirken an der Schwenkachse (0) als unterer Lenkhebel (c) . Der Antrieb erfolgt konventionell über eine Tretkurbel (40). Ein besonderer Vorteil besteht darin, daß vordere und hintere Einheit identisch ausgebildet sind. Die Lenkstange (21) und der Sattel (26) sind höhenjustierbar in die vordere Radaufhängung (31) bzw. in die hintere Radaufhängung (30) eingespannt.
Bei dem Fahrrad in Fig. 2a greifen die vordere Radaufhängung (31) und die hintere Radaufhängung (30) unterhalb der Radachsen an Vorderrad (11) und Hinterrad (10) an. Sie sind als gabelförmiger Rohrrahmen ausgebildet. In der Verlängerung der senkrechten Gelenkanordnung befindet sich ein Rundhohlprofil, das zum Hinterrad (10) hin gebogen ist. An seinem Ende befindet sich die Tretkurbel (40). Zusätzliche Streben (38) zwischen der hinteren Radachse und der Tretkurbel (40) nehmen die Pedalkräfte am unteren Lenkhebel (c) auf. Auch bei diesem Fahrrad ist das Drehgelenk (1,2) oberhalb der Radachsen angeordnet.
Fig. 2b zeigt das erfindungsgemäße Fahrrad in der teilgefalteten Aufsicht, wobei ein fahrbarer Einschlagwinkel dargestellt ist.
Fig. 2c zeigt das erfindungsgemäße Fahrrad in Transportstellung, in der vordere und hintere Einheit um die Schwenkachse (0) zusammengeklappt sind.

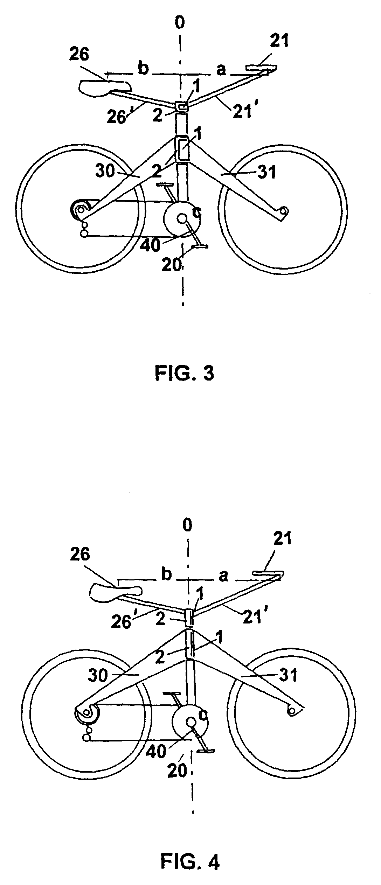

Fig. 3 zeigt ein erfindungsgemäßes Fahrrad, bei dem die gabelförmige vordere Radaufhängung (31) und die gabelförmige hintere Radaufhängung (30), die Sattelstütze (26'), die Lenkstange (21) sowie die Tretkurbel (40) an einem gemeinsamen Führungsrohr, das die Schwenkachse (0) definiert, angeschlossen sind. Das Tretlager zur Aufnahme der Tretkurbeln (40) befindet sich am unteren Ende der Gelenkanordnung und ist über ein gerades Rohrstück an die hintere Einheit (30) angeschlossen. Die Stellung der Pedale (20) mit dem Tretlager in der Gelenkanordnung stabilisiert den Geradeauslauf des Fahrrades. Die gabelförmigen Radaufhängungen (30,31) sind als tragende Schalenkonstruktion ausgebildet und unterhalb der Radachsen über ein Knotenblech mit den Achsen von Vorderrad und Hinterrad verbunden.

Fig. 4 zeigt ein erfindungsgemäßes Fahrrad, wie in Fig. 3 dargestellt, wobei die vordere Radaufhängung (31) und die hintere Radaufhängung (30) oberhalb der Radachsen an Vorderrad und Hinterrad angreifen.

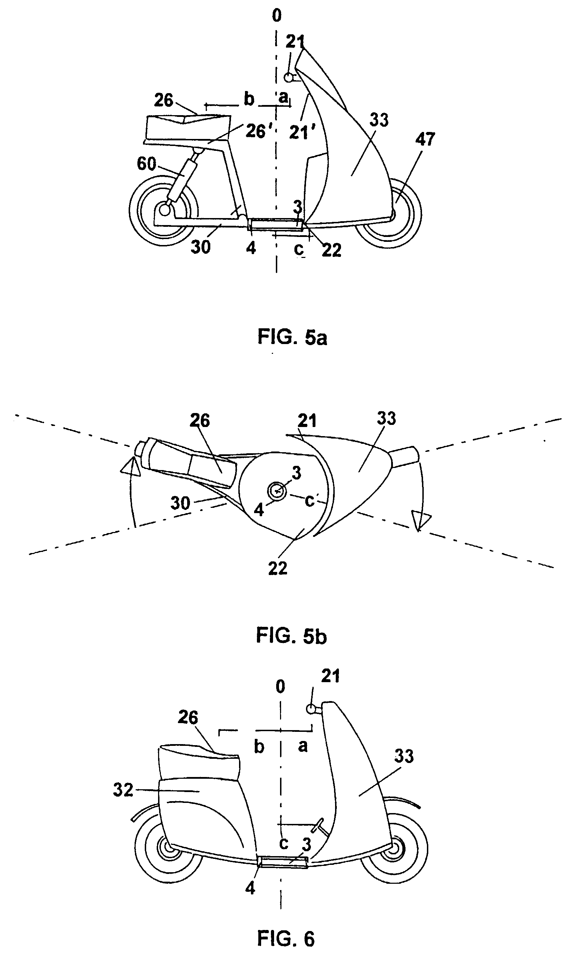

Fig. 5a zeigt einen erfindungsgemäßen Elektroroller mit Vorderradantrieb durch einen Radnabenmotor (47). Der Roller besteht aus zwei um eine gemeinsame Schwenkachse (0) drehbaren Einheiten, wobei sich das Drehgelenk (3,4) unterhalb der Radachsen befindet. Die vordere Radaufhängung (33) ist als Schalenkonstruktion ausgebildet, wobei die hintere Radaufhängung (30) als Rohrrahmen ausgebildet ist. Die Lenkung erfolgt über Ziehen bzw. Drücken an der Lenkstange (21) und gleichzeitig über eine Abstützung der Füße auf den Fußrasten (22), die als unterer Lenkhebel wirken.
Fig. 5b zeigt den erfindungsgemäßen Elektroroller in der Aufsicht, wobei ein fahrbarer Einschlagwinkel dargestellt ist.

Fig. 6 zeigt einen erfindungsgemäßen Elektroroller, der in seinem Aufbau dem in Fig. 5 gezeigten Roller entspricht, wobei beide Radaufhängungen (32,33) als Schalenkonstruktion ausgebildet sind.

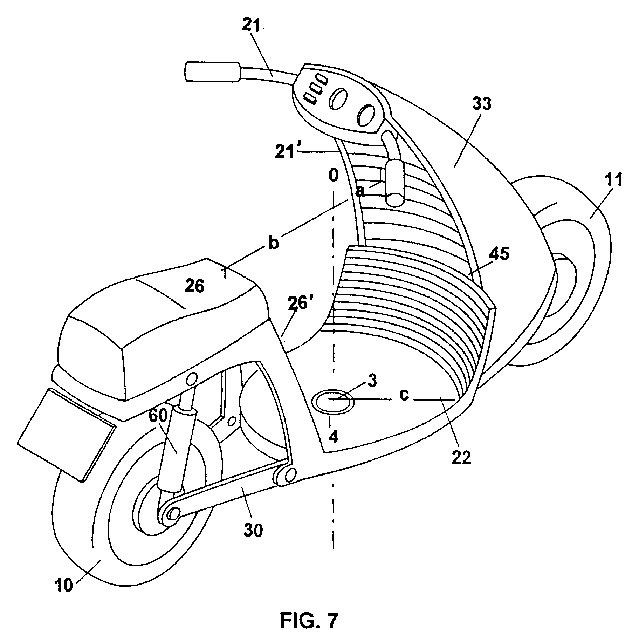

In Fig. 7 ist ein erfindungsgemäßer Motorroller isometrisch dargestellt. Die vordere Radaufhängung (33) besteht aus einer selbsttragenden Schalenkonstruktion, und die hintere Radaufhängung (30) ist gabelförmig ausgebildet. Die vordere und die hintere Einheit sind über ein scheibenförmiges Drehgelenk (3,4) unterhalb der Radachsen drehbar miteinander verbunden. Bei der Lenkung greift der Lenkhebel (a) von vorne, der Lenkhebel (b) von hinten und der untere Lenkhebel (c) auch von vorne an die Schwenkachse (0) an. Die Anordnung der Krafteinleitungspunkte für die Lenkung ermöglichen eine leichte und sichere Handhabung des Knick-Neige-Lenk-Systems. Die Anordnung des Drehgelenks (3,4) auf Höhe bzw. direkt unterhalb der Radachsen zusammen mit dem Frontantrieb lassen ein günstiges Fahrverhalten erwarten. Die Breite des Rollers im Bereich der Gelenkanordnung erlaubt gegebenenfalls den Einbau von Schwingungsdämpfern, die am Drehgelenk (3,4) wirksam werden. Da die vordere Einheit (33) gegenüber herkömmlichen Konstruktionen wesentlich vereinfacht ist, weil sich das Drehgelenk (3,4) in der Mitte befindet, kann hier ein Verbrennungsmotor (45) mit allen für den Betrieb notwendigen Aggregaten innerhalb der von der Schalenkonstruktion gebildeten aerodynamischen Hüllform integriert werden. Deshalb kann die hintere Einheit (30) als gefederter Sitz (26) für ein bis zwei Personen und mit den zu einer Plattform erweiterten Fußrasten (22) zum Transport von Gegenständen benutzt werden.

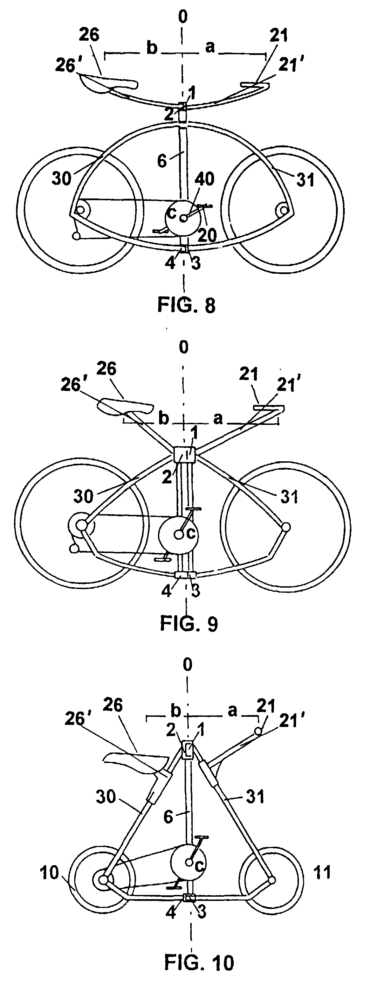

Fig. 8 zeigt ein erfindungsgemäßes Fahrrad mit senkrechter Gelenkanordnung und Hinterradantrieb. Hier befindet sich das obere Drehgelenk (1,2) oberhalb der Radachsen, während das untere Drehgelenk (3,4) sich unterhalb der Radachsen befindet. Zwischen den Drehgelenken (1-4), die ein Hohlprofil (6) verbindet, ist die Tretkurbel (40) angebracht. Die vordere und die hintere Radaufhängung (30,31) sind jeweils als gebogene Rohrrahmen ausgebildet. Der untere Rahmenteil liegt tiefer als der untere Totpunkt der Tretkurbel (40), so daß die Tretkurbel (40) auch bei extremen Lenkeinschlägen nicht mit dem Rohrrahmen in Berührung kommen kann. Der tiefliegende Schwerpunkt bei diesem System führt zu einem stabilen Geradeauslauf, da die Tragglieder des Rahmens von unten und von oben an die Radachsen herangeführt werden. Auch hier greift die Tretkurbel (40) direkt in der Schwenkachse (0) an und liegt als unterer Lenkhebel (c) zwischen dem Sattel (26) und der Lenkstange (21), deren Verbindungselemente (26' bzw. 21') die oberen Lenkhebel (a,b) bilden.

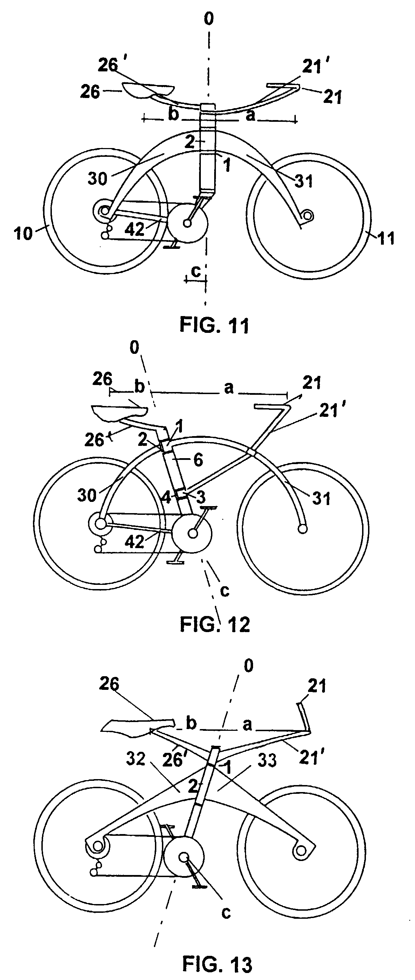

Fig. 9 zeigt ein Fahrrad, bei dem die vordere und die hintere Radaufhängung (30,31) jeweils als dreiecksförmige Rohrrahmen ausgebildet sind, die über ein oberes Drehgelenk (1,2) und ein unteres Drehgelenk (3,4) zusammengeschlossen sind.

Fig. 10 zeigt ein Fahrrad, bei dem die vordere und die hintere Radaufhängung (30,31) zusammen ein Dreieck bilden, wobei sich das obere Drehgelenk (1,2) in der oberen Ecke des Dreiecks befindet, während die Radachsen von Vorderrad (11) und Hinterrad (10) die beiden unteren Ecken des Dreiecks definieren, und das untere Drehgelenk (3, 4) die zur Fahrbahn gewandte Seite des Dreiecks halbiert. Beide Drehgelenke (1-4) sind durch ein Hohlprofil (6) miteinander verbunden. Das Fahrrad besitzt 18 zöllige Räder (10,11). Die Sattelstütze (26') und das Verbindungselement (21') der Lenkstange (21) sind höhenjustierbar an den Radaufhängungen (30,31) befestigt.

Fig. 11 zeigt ein erfindungsgemäßes Fahrrad mit gabelförmigen, gekrümmten Radaufhängungen (30,31), die innerhalb des von den Radachsen definierten Radstandes mit dem Vorderrad (11) und dem Hinterrad (10) verbunden sind. Zwei zusätzliche Streben verbinden das Tretlager (42) mit der hinteren Radachse und leiten die Pedal- bzw. Lenkkräfte in die hintere Einheit ein.

Das in Fig. 12 gezeigte Fahrrad besitzt eine nach hinten geneigte Gelenkanordnung. Auch hier dienen die Streben der Stabilisierung des Tretlagers (42). Die vordere, größere Einheit wird durch eine zusätzliche Strebe stabilisiert. Hier verläuft die Sattelstütze (26') koaxial mit der Gelenkanordnung und ist an ein Führungsrohr (6) angeschlossen, an dem die hintere Radaufhängung (30) und die vordere Einheit drehbar miteinander verbunden sind.

Fig. 13 zeigt ein erfindungsgemäßes Fahrrad mit nach vorne geneigter Gelenkanordnung. Die Radaufhängungen (32,33) sind als selbsttragende Schalenkonstruktion aus Blech oder Kunststoff ausgebildet. Der Sattel (26) und die Lenkstange (21) kragen von der Gelenkanordnung aus. Die elastische Verformung der Verbindungselemente (21',26') wird zur Federung von Sattel (26) und Lenkstange (21) genutzt.

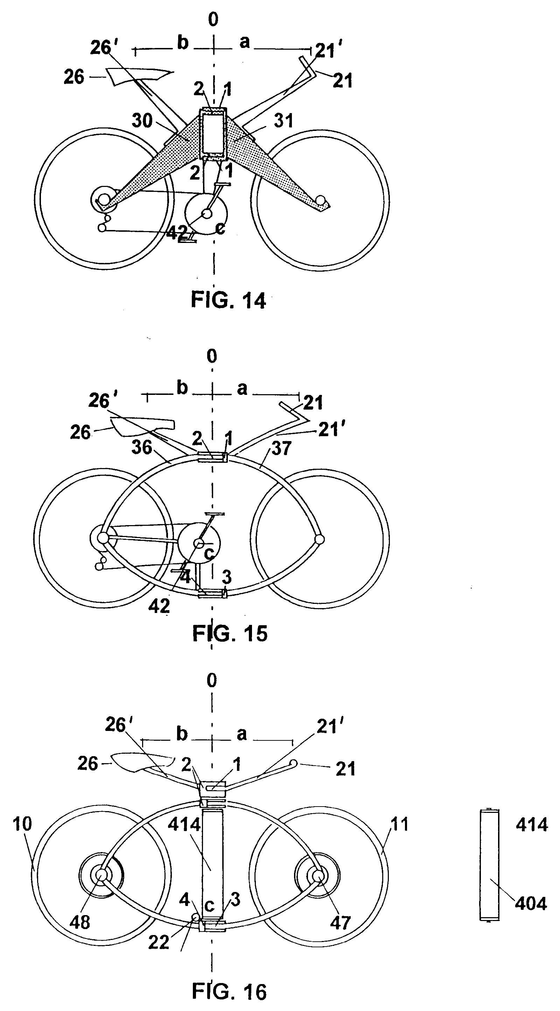

Das Fahrrad in Fig. 14 hat zwei identische Radaufhängungen (30,31), die als gabelförmiger Hohlkastenquerschnitt ausgebildet sind. Die Sattelstütze (26') und das Verbindungselement (21') der Lenkstange sind höhenjustierbar und an den Radaufhängungen (30,31) befestigt. Das Tretlager (42) ist geringfügig gegenüber der Gelenkanordnung nach hinten versetzt, liegt unterhalb der Radachsen und wird von einer gabelförmigen Konsole, die am oberen Drehgelenk (1,2) angreift, gehalten.

Beim Fahrrad in Fig. 15 sind die Radaufhängungen (36,37) als Federelemente ausgebildet. Eine konstruktive Verbindung zwischen dem oberen Drehgelenk (1,2) und dem unteren Drehgelenk (3,4) ist nicht vorhanden. Dadurch wirken die vordere Einheit und die hintere Einheit als zusammenhängendes Federelement. Bei in dieser Ausführungsvariante verlängert sich der Radstand bei stoßartiger Belastung. Ein versteifter Teil der hinteren Radaufhängung (36), nimmt das Tretlager (42) auf.

Fig. 16 zeigt ein erfindungsgemäßes Elektrorad, das in seinem Aufbau dem Rad in Fig. 15 entspricht, wobei der Antrieb durch zwei Radnabenmotoren (47,48) in Vorderrad (11) und Hinterrad (10) erfolgt. Ein herausnehmbarer Behälter (414) ist zwischen dem oberen Drehgelenk (1,2) und dem unteren Drehgelenk (3,4) eingesetzt und dient der Aufnahme von Speicherzellen (404). Die Speicherzellen (404) können auf einfache Weise vom Fahrzeug entfernt und aufgeladen werden. An Gefällstrecken können die Radnabenmotoren (47,48) zur Stromerzeugung herangezogen werden. Die Fußrasten (22) sind unterhalb der Radachsen angeordnet.

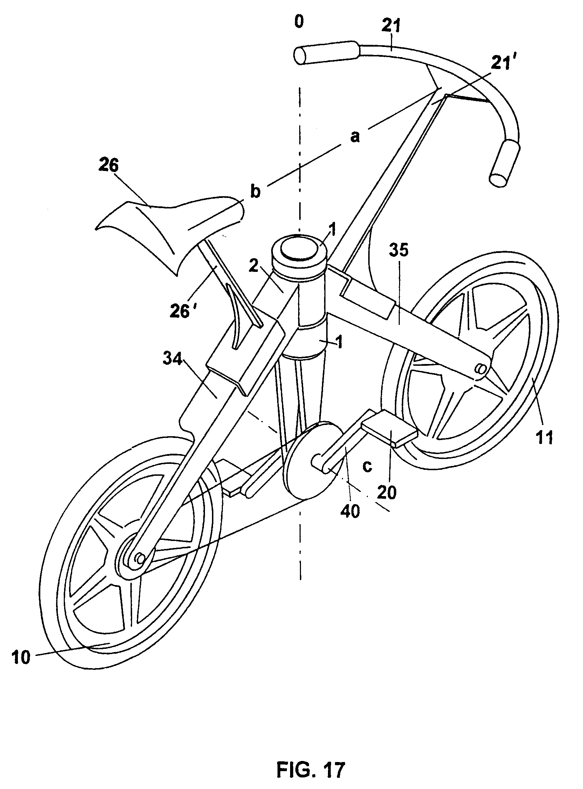

Fig. 17 zeigt ein erfindungsgemäßes Fahrrad, bei dem die Radaufhängungen (34,35) als einarmige Schwingen ausgebildet sind. Der symmetrische Aufbau der Konstruktion erlaubt ein Zusammenklappen zu einem minimalen Volumen.

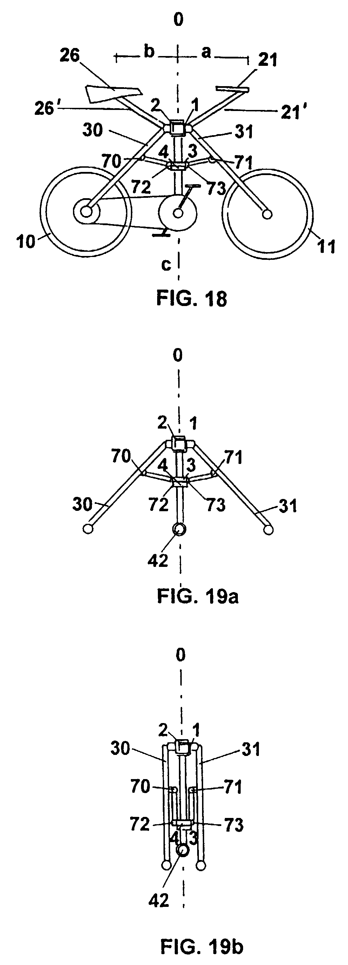

In Fig. 18 ist ein Faltrad dargestellt. Die Knotenpunkte (70-73) der vorderen und hinteren Radaufhängung (30,31) sind hier als Drehgelenke ausgebildet. Durch Lösen einer Verriegelung an der Gelenkanordnung kann das Fahrrad zu einem kompakten Bündel zusammengefaltet werden.

Die Fig. 19a und 19b zeigen den Rohrrahmen des Fahrrades in Fig. 18 in entfalteter und zusammengefalteter Stellung.

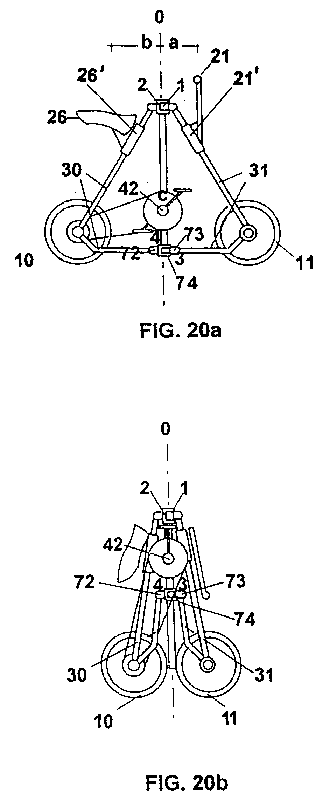

Fig. 20a zeigt ein fahrbereites Faltrad, während in Fig. 20b das gefaltete Rad dargestellt ist. Am unteren Ende der Gelenkanordnung befindet sich eine Verriegelung (74), an die das Tretlager (42) und die unteren Streben der vorderen und hinteren Radaufhängung (30,31) angeschlossen sind. Durch Lösen der Verriegelung (74) kann das Fahrrad zu einem kompakten Bündel zusammengelegt werden. Der Abstand von Tretlager (42) und Achse des Hinterrades (10) bleibt während des Faltvorgangs konstant, so daß sich der Antriebsriemen nicht aushängt. Die Sattelstütze (26') und der Lenkhebel (21) sind als Schrägkonsole ausgebildet und können an der vorderen und hinteren Radaufhängung (30,31) in der Höhe justiert werden. Dieses Faltrad ist sehr leicht und kann in gefalteter Stellung überall hin mitgenommen werden.

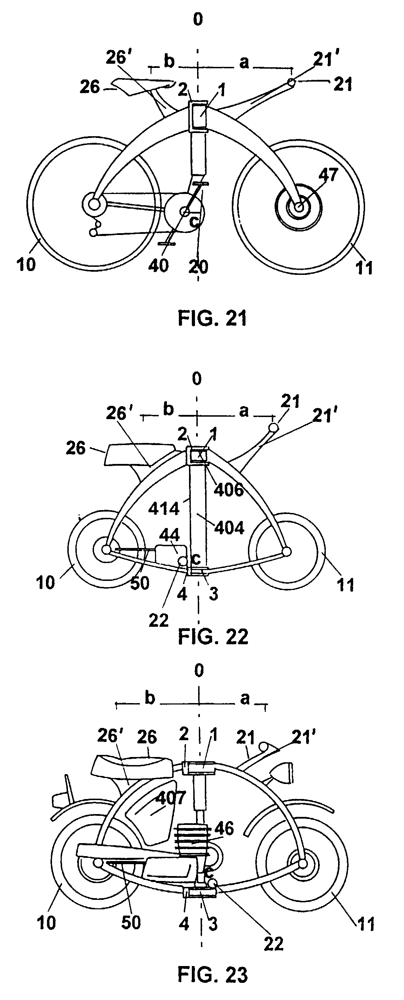

Das Elektrorad in Fig. 21 besitzt einen Vorderradantrieb durch Radnabenmotor (47) mit einem zusätzlichen Hinterradantrieb über eine Tretkurbel (40), die sich in der Gelenkanordnung befindet.

Bei dem Elektroroller in Fig. 22 ist in der Gelenkanordnung ein Behälter (414) für Elektrospeicherzellen (404) angeordnet. Am oberen Ende der Gelenkanordnung befindet sich eine Steckdose (406) für den Anschluß an ein Ladegerät. Der Antrieb erfolgt über einen Elektromotor (44), der sich am unteren Ende der Gelenkanordnung befindet. Der Antrieb auf die Radachse erfolgt über eine Kardanwelle (50) . Die Fußrasten (22) wirken als unterer Lenkhebel (c).

Fig. 23 zeigt ein erfindungsgemäßes Motorrad. Hier befindet sich der Verbrennungsmotor (46) zwischen dem oberen Drehgelenk (1,2) und dem unteren Drehgelenk (3,4). Der Tank (407) ist in die hintere Einheit integriert. Das Hinterrad wird über eine Kardanwelle (50) angetrieben. Auch hier dienen die Fußrasten (22) als unterer Lenkhebel (c) zur Unterstützung der Lenkung. Zusammen mit den oberen Lenkhebeln (a,b) kann der Fahrer das Gleichgewicht in der Schwenkachse (0) durch drei Krafteinleitungspunkte beeinflussen.

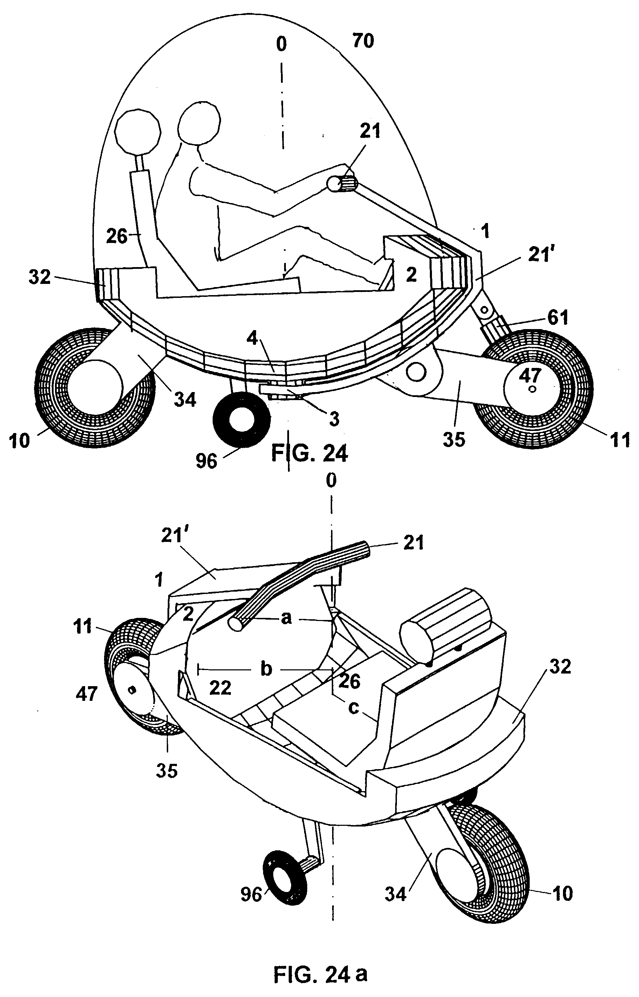

In Fig. 24 ist ein erfindungsgemäßer Elektro-Kabinenroller dargestellt, bei dem die hintere Radaufhängung (32) aus einer selbsttragenden Schalenkonstruktion besteht, die zu einer Fahrerkabine (70) mit Acrylglasabdeckung weiterentwickelt ist. Am unteren Ende dieser Kabine (70) befindet sich ein Drehgelenk (3,4), an dem die vordere Radaufhängung (33), die zusätzlich am oberen Rand der im vorderen Bereich kreisringsegmentförmigen hinteren Radaufhängung (34) drehbar gelagert ist. Zur Stabilisierung im Stand besitzt dieser Elektroroller zwei einschwenkbare Stützräder (96). Der Antrieb erfolgt über einen Radnabenmotor (47) am Vorderrad (11).

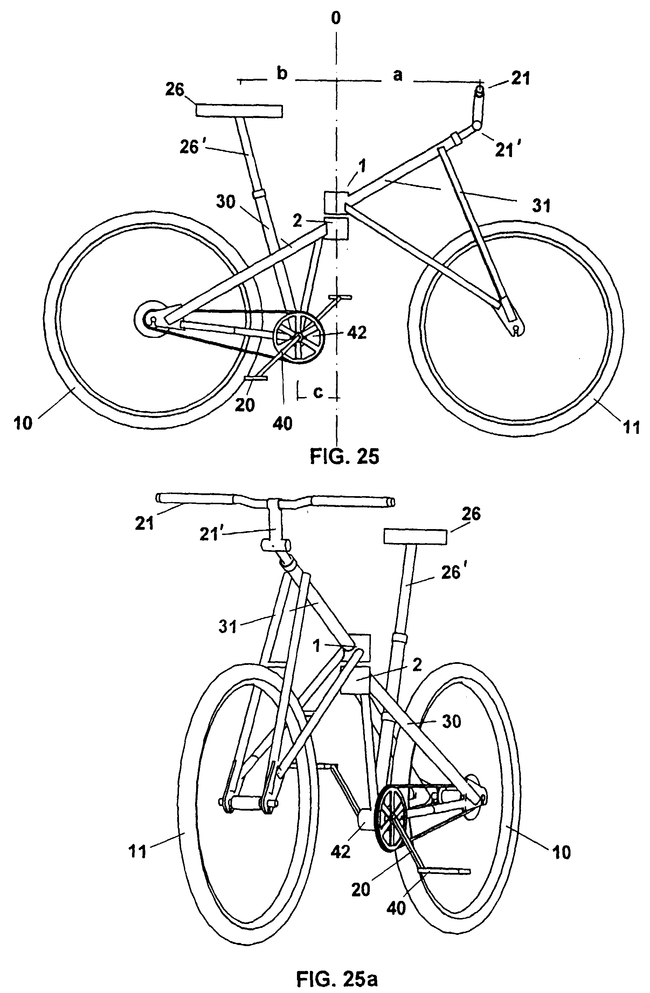

Fig. 25 zeigt ein erfindungsgemäßes Klapprad, bei dem die vordere Radaufhängung (31) und die hintere Radaufhängung (30) als Rohrrahmen ausgebildet sind. Sie sind an einem oberen Drehgelenk (1,2) gegeneinander versetzt angeordnet, so daß sich das Rad auf die Hälfte seiner Länge zusammenlegen läßt.
Fig. 25a zeigt dieses Klapprad in perspektivischer Darstellung.

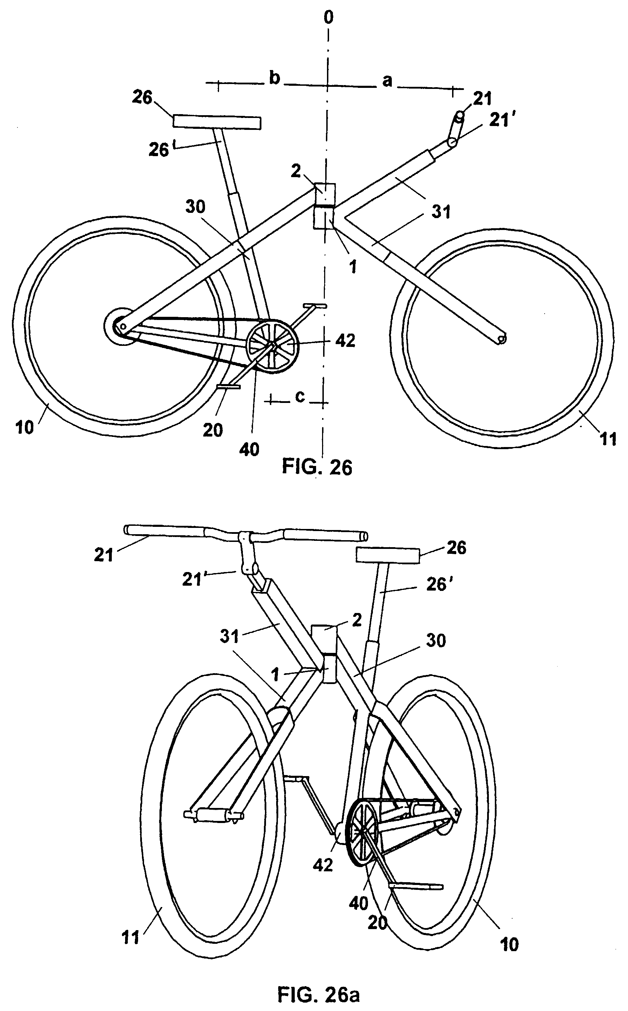

Fig. 26 zeigt ein erfindungsgemäßes Klapprad, bei dem die vordere Radaufhängung (31) und die hintere Radaufhängung (30) aus biegebeanspruchten Rechteckhohlprofilen bestehen. Sie sind an einem oberen Drehgelenk (1,2) gegeneinander versetzt angeordnet, so daß sich das Rad auf die Hälfte seiner Länge zusammenlegen läßt.
Fig. 26a zeigt dieses Klapprad in perspektivischer Darstellung.

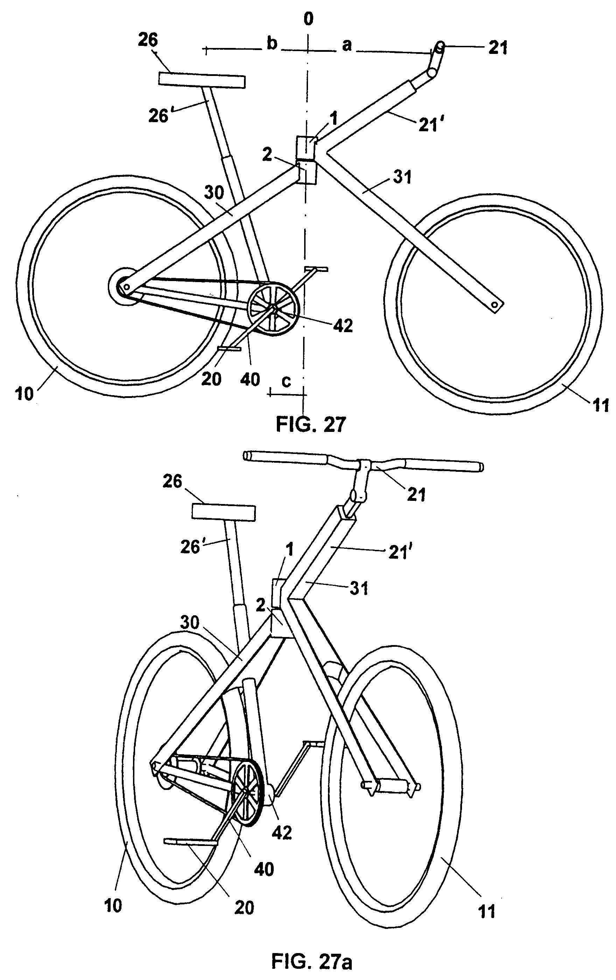

Fig. 27 zeigt ein erfindungsgemäßes Klapprad, bei dem die vordere Radaufhängung (31) und die hintere Radaufhängung (30) aus biegebeanspruchten Rechteckhohlprofilen bestehen. Sie sind an einem oberen Drehgelenk (1,2) gegeneinander versetzt angeordnet, so daß sich das Rad auf die Hälfte seiner Länge zusammenlegen läßt.
Fig. 27a zeigt dieses Klapprad in perspektivischer Darstellung.

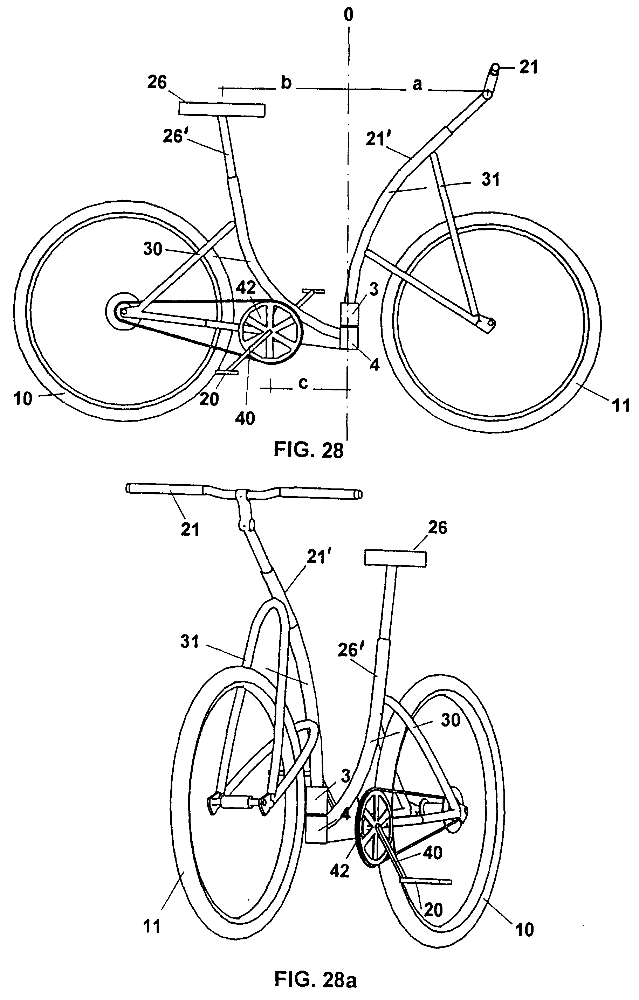

Fig. 28 zeigt ein erfindungsgemäßes, klappbares Damenrad, bei dem zwischen der Sattelstütze (26') und der Lenkstange (21) mit dem Verbindungselement (21') zur Gelenkanordnung eine V-förmige Durchstiegsöffnung vorgesehen ist, und bei dem die vordere Radaufhängung (31) und die hintere Radaufhängung (30) in einem unteren Drehgelenk (3,4), das unterhalb der Radachsen liegt, drehbar miteinander verbunden sind.
Fig. 28a zeigt dieses Damenrad in perspektivischer Darstellung.

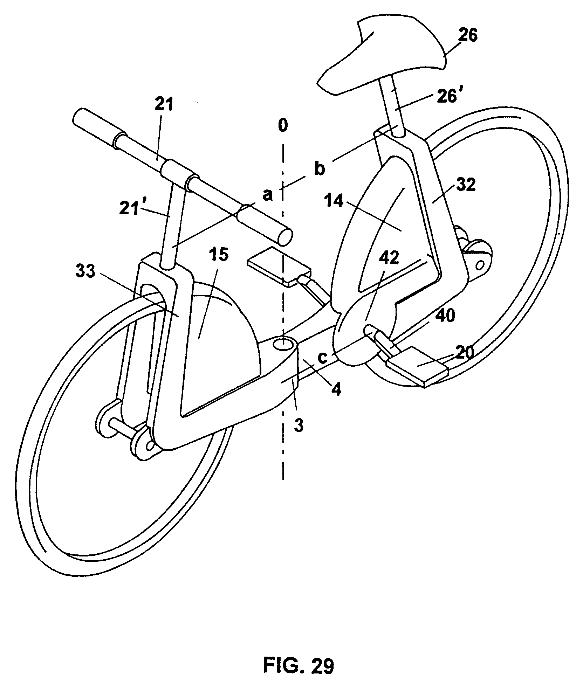

In Fig. 29 ist ein erfindungsgemäßes Damenfahrrad dargestellt, bei dem die vordere Radaufhängung (33) und die hintere Radaufhängung (32) als selbsttragende Schalenkonstruktion ausgebildet sind. Die vordere und hintere Einheit sind über ein unteres Drehgelenk (3,4), das unterhalb der Radachsen liegt, verbunden. Das Tretlager (42) ist gegenüber der Gelenkanordnung nach hinten versetzt und liegt ebenfalls unterhalb der Radachsen. Die Antriebseinheit und die der u-förmigen Durchstiegsöffnung zugekehrten Radflächen sind bis auf die Tretkurbel (40) von einer nichttragenden Schutzverkleidung (15,14) umgeben. Der besondere Vorteil dieser Ausführungsform liegt in dem tiefliegenden Durchstieg zwischen Vorder-und Hinterrad und der Abschirmung der Radoberfläche durch die vordere und hintere Schutzverkleidung (15,14). Auch bei diesem Rad sind zwei obere Lenkhebel (a, b) und ein unterer Lenkhebel (c), die an die Schwenkachse (0) angreifen, dargestellt.

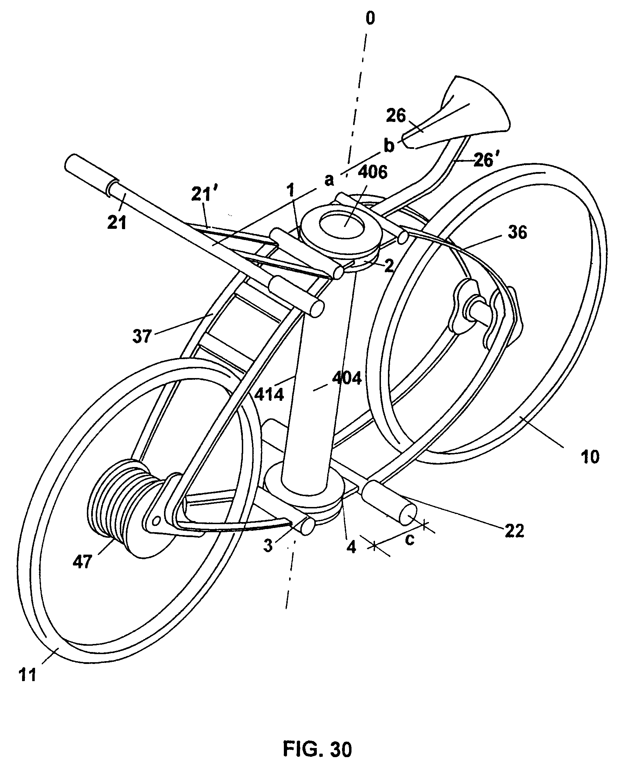

In Fig. 30 ist ein erfindungsgemäßes Elektrorad isometrisch dargestellt. Die Gelenkanordnung ist um 7° nach hinten geneigt. Zwischen dem oberen Drehgelenk (1,2) und dem unteren Drehgelenk (3,4) ist ein herausnehmbarer Behälter (414) zur Aufnahme von Elektrospeicherzellen (404) eingesetzt. Das obere Drehgelenk (1,2) und das untere Drehgelenk (3,4) sind ringförmig ausgebildet. Am oberen Drehgelenk (1,2) befindet sich eine durch einen Deckel verschließbare Steckdose (406) für den Anschluß eines Ladegerätes. Die vordere Einheit und die hintere Einheit sind elastisch mit dem oberen und dem unteren Drehgelenk (1-4) verbunden. Die vordere und die hintere Radaufhängung (36,37) sind als Federelemente ausgebildet. Der Antrieb erfolgt über einen Radnabenmotor (47) in der Achse des Vorderrades (11). Sattelstütze (26') und Verbindungselement (21') der Lenkstange sind als federnde Schwingen mit der hinteren bzw. vorderen Radaufhängung (36,37) verbunden. Die Fußrasten (22) liegen weit unterhalb der Radachsen, so daß sie als unterer Lenkhebel optimal wirksam sind.

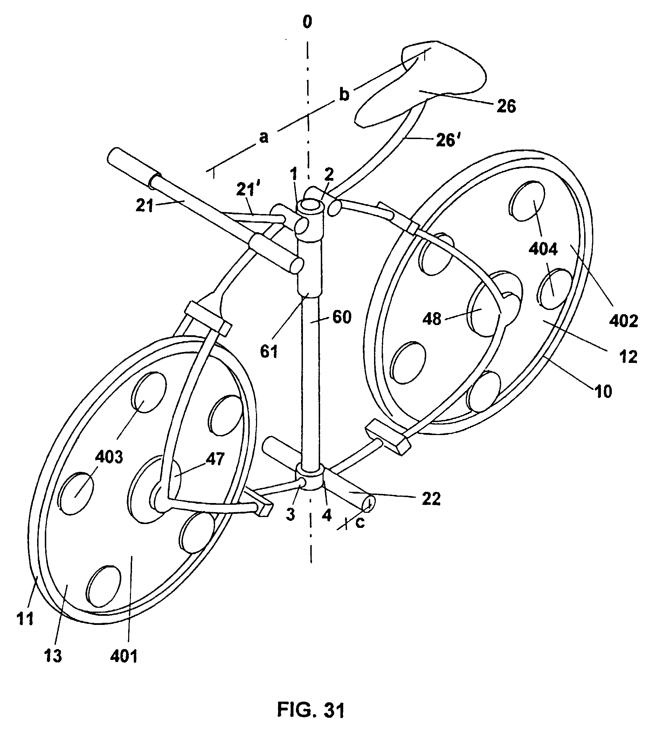

Fig. 31 zeigt ein erfindungsgemäßes Elektrorad, bei dem Vorderrad (11) und Hinterrad (10) als Scheiben (12,13) ausgebildet sind. In die Scheiben sind kreisrunde Elektrospeicherzellen (403,404) eingesetzt. Der Antrieb erfolgt über Radnabenmotoren (47,48) in Vorderrad (11) und Hinterrad (10). In der Gelenkanordnung ist ein Federelement (61) integriert.

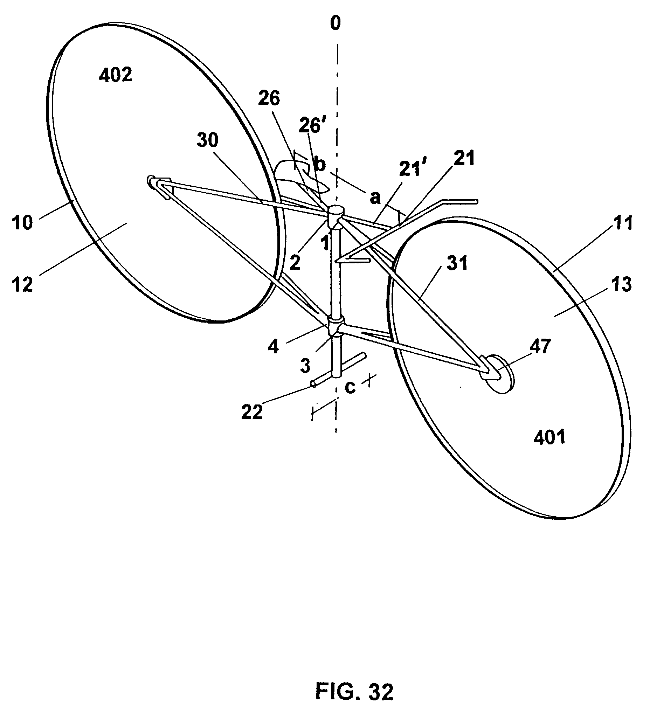

Fig. 32 zeigt ein erfindungsgemäßes Elektrorad mit extrem großem Vorder- und Hinterrad (11,10), die als kohlefaserverstärkte Scheiben (12,13) ausgebildet und mit Photovoltaikzellen (401,402) bestückt sind. Zur Vergrößerung der Kollektorfläche kann die Radoberfläche gewellt oder gefaltet ausgebildet werden. Bei einem angenommenen Raddurchmesser von 1,25 m ergibt sich eine Kollektorfläche mmd. 4,9 qm. Bei einer angenommenen Leistung von ca. 0,5 PS pro Quadratmeter Kollektorfläche ergibt sich eine Antriebsleistung von ca. 2,5 PS für den vorderen Radnabenmotor (47). Das Knick-Neige-Lenk-System ist für dieses vergleichsweise lange einspurige Zweirad besonders vorteilhaft.

## Patentansprüche

1. Einspuriges Zweirad, insbesondere Fahrrad, Elektrorad, Elektroroller, Motorroller oder Motorrad, bestehend aus einem vorderen Teil und einem hinteren Teil, die beide mittels einer bezüglich der Radachsen senkrecht angeordneten Schwenkachse (0) verschwenkbar miteinander verbunden sind, wobei der vordere Teil eine vordere Radaufhängung (31,33,35,37) mit dem Vorderrad (11), eine gegenüber der Gelenkanordnung (1-4) nach vorne versetzte Lenkstange (21) und ein Verbindungselement (21') der Lenkstange umfaßt, und der hintere Teil eine hintere Radaufhängung (30,32,34,36) mit dem Hinterrad (10) und eine den Sattel (26) tragende Sattelstütze (26') umfaßt, und eine Antriebseinheit (40-50) vorgesehen ist, die entweder zum vorderen Teil oder zum hinteren Teil gehört, **dadurch gekennzeichnet**, daß sich die Gelenkanordnung (1-4) in etwa mittiger Stellung zwischen Vorder- und Hinterrad (11,10) befindet und daß die vordere Radaufhängung (31,33,35,37), die Lenkstange (21) und das Verbindungselement (21') eine erste in sich unverdrehbare Einheit bilden, die über einen oberen Lenkhebel (a) von vorne auf die Schwenkachse (0) der Gelenkanordnung (1-4) einwirkt, und daß die hintere Radaufhängung (30,32,34,36) und die Sattelstütze (26') eine zweite in sich unverdrehbare Einheit bilden, die mit einem oberen Lenkhebel (b) von hinten und einem unteren Lenkhebei (c), der als Pedale (20) oder starre Fußrasten (22) ausgebildet ist, auf die Schwenkachse (0) der Gelenkanordnung (1-4) einwirkt.

2. Einspuriges Zweirad nach Anspruch 1, dadurch gekennzeichnet, daß die Antriebseinheit dem hinteren Teil zugeordnet ist und ein Tretlager (42) mit Tretkurbeln (40) und an diesen drehbar angeordnete Pedale (20) umfaßt, und daß das Tretlager gegenüber der Schwenkachse (0) der Gelenkanordnung koaxial oder versetzt angeordnet ist.

3. Einspuriges Zweirad nach Anspruch 1, dadurch gekennzeichnet, daß die zweite Einheit statt der Pedale (20) eine starre Fußraste (22) umfaßt, die gegenüber der Schwenkachse (0) der Gelenkanordnung koaxial oder versetzt angeordnet ist.

4. Einspuriges Zweirad nach einem der Ansprüche 1-3, dadurch gekennzeichnet, daß die vordere Einheit und die hintere Einheit in der Schwenkachse (0) über mindestens ein Drehgelenk (1-4) miteinander verbunden sind.

5. Einspuriges Zweirad nach Anspruch 4, dadurch gekennzeichnet, daß die Schwenkachse (0) in Ruhestellung senkrecht zur Fahrbahn steht.

6. Einspuriges Zweirad nach Anspruch 4, dadurch gekennzeichnet, daß die Schwenkachse (0) in Ruhestellung in Längsrichtung nach vorne oder hinten geneigt ist und innerhalb der Laufflächen von Vorderrad (11) und Hinterrad (10) einen Schnittpunkt mit der Fahrbahn hat.

7. Einspuriges Zweirad nach einem der Ansprüche 4-6, dadurch gekennzeichnet, daß das Drehgelenk (1,2) auf Höhe der Radachsen oder oberhalb der Radachsen liegt.

8. Einspuriges Zweirad nach einem der Ansprüche 4-6, dadurch gekennzeichnet, daß das Drehgelenk (3,4) unterhalb der Radachsen liegt.

9. Einspuriges Zweirad nach Anspruch 4, dadurch gekennzeichnet, daß ein Drehgelenk (1,2) oberhalb und ein Drehgelenk (3,4) unterhalb der Radachsen liegt.

10. Einspuriges Zweirad nach einem der Ansprüche 1-9, dadurch gekennzeichnet, daß die Lenkstange (21), die vordere Radaufhängung (31,33,35,37), die Sattelstütze (26'), die hintere Radaufhängung (30,32,34,36) und die Pedale (20) bzw. die Fußrasten (22) unmittelbar an ein zentrales Führungsrohr (6; Fig. 8,10,12), das die Schwenkachse (0) definiert, angeschlossen sind.

11. Einspuriges Zweirad nach einem der Ansprüche 4-10, dadurch gekennzeichnet, daß das Drehgelenk (1-4) aus einem Führungsrohr (6; Fig. 8,10,12) besteht, das mit einer der beiden Einheiten unverdrehbar verbunden ist, während es mit der zweiten Einheit über ein oberes und ein unteres Wälzlager in Verbindung steht.

12. Einspuriges Zweirad nach einem der Ansprüche 4-11, dadurch gekennzeichnet, daß das Drehgelenk (1-4) scheibenförmig ausgebildet ist, und die vordere Einheit und die hintere Einheit über ein ringförmiges Wälzlager miteinander verbunden sind.

13. Einspuriges Zweirad nach einem der Ansprüche 1-12, dadurch gekennzeichnet, daß die vordere Einheit und die hintere Einheit in der Gelenkanordnung zusammenklappbar sind.

14. Einspuriges Zweirad nach einem der Ansprüche 4-13, dadurch gekennzeichnet, daß die vordere Einheit und die hintere Einheit in der Höhe gegeneinander versetzt am Drehgelenk (1-4) angreifen.

15. Einspuriges Zweirad nach einem der Ansprüche 4-14, dadurch gekennzeichnet, daß die vordere Einheit und die hintere Einheit jeweils mit einem seitlichen Versatz an der Gelenkanordnung angreifen.

16. Einspuriges Zweirad nach einem der Ansprüche 1-15, bei dem die vordere Radaufhängung (31,33,35,37) und die hintere Radaufhängung (30,32,34,36) durch je einen Rohrrahmen mit Knotenpunkten gebildet ist, dadurch gekennzeichnet, daß die Knotenpunkte (71,72) des Rohrrahmens als Drehgelenke ausgebildet sind, und die hintere Einheit durch Lösen eines Knotenpunkts (73,74) in der Gelenkanordnung zu einem kompakten Bündel zusammenfaltbar sind.

17. Einspuriges Zweirad nach einem der Ansprüche 9-16, dadurch gekennzeichnet, daß das obere Drehgelenk (1,2) und das untere Drehgelenk (3,4) direkt durch ein ein- oder mehrstükkiges Element (5) miteinander verbunden sind.

18. Einspuriges Zweirad nach einem der Ansprüche 9-17, dadurch gekennzeichnet, daß zwischen dem oberen Drehgelenk (1,2) und dem unteren Drehgelenk (3,4) keine direkte Verbindung besteht.

19. Einspuriges Zweirad nach einem der Ansprüche 4-18, dadurch gekennzeichnet, daß ein Federelement (60,61) oberhalb des Drehgelenks (1-4) koaxial zu dessen Achse (0) angeordnet ist.

20. Einspuriges Zweirad nach einem der Ansprüche 1-19, dadurch gekennzeichnet, daß die Lenkstange (21) über ein Drehgelenk und über ein Federelement (61; Fig. 24) mit der vorderen Radaufhängung (31,33,35) verbunden ist.

21. Einspuriges Zweirad nach einem der Ansprüche 1-20, dadurch gekennzeichnet, daß die Sattelstütze (26') über ein Drehgelenk und über ein Federelement (60; Fig. 7) mit der hinteren Radaufhängung (30,32,34) verbunden ist.

22. Einspuriges Zweirad nach einem der Ansprüche 4-21, dadurch gekennzeichnet, daß die vordere Einheit und/oder die hintere Einheit über eine elastische Verbindung an das Drehgelenk (1-4) angeschlossen ist.

23. Einspuriges Zweirad nach einem der Ansprüche 4-22, dadurch gekennzeichnet, daß ein Federelement (61; Fig. 31) zwischen dem oberen Drehgelenk (1,2) und dem unteren Drehgelenk (3,4) angeordnet ist.

24. Einspuriges Zweirad nach einem der Ansprüche 1-23, dadurch gekennzeichnet, daß die vordere Radaufhängung (37; Fig. 15,30) und die hintere Radaufhängung (36) als Federelemente ausgebildet sind.

25. Einspuriges Zweirad nach einem der Ansprüche 1-24, dadurch gekennzeichnet, daß mindestens die vordere Radaufhängung (31,33,35,37) oder die hintere Radaufhängung (30,32,34,36) als Rohrrahmen ausgebildet ist.

26. Einspuriges Zweirad nach einem der Ansprüche 1-25, dadurch gekennzeichnet, daß mindestens die vordere Radaufhängung (33) oder die hintere Radaufhängung (32) als selbsttragende Schalenkonstruktion ausgebildet ist.

27. Einspuriges Zweirad nach einem der Ansprüche 1-26, dadurch gekennzeichnet, daß mindestens die vordere Radaufhängung (31) oder die hintere Radaufhängung (32) als Gabel ausgebildet ist.

28. Einspuriges Zweirad nach einem der Ansprüche 1-27, dadurch gekennzeichnet, daß mindestens die vordere Radaufhängung (35) oder die hintere Radaufhängung (34) als einarmige Schwinge ausgebildet ist.

29. Einspuriges Zweirad nach einem der Ansprüche 1-28, dadurch gekennzeichnet, daß mindestens die vordere Radaufhängung (31,33,35,37) oder die hintere Radaufhängung (30,32,34,36) mit einem Versatz - nach oben, zur Seite oder nach unten - zur Radachse an das Vorderrad (11) bzw. das Hinterrad (10) angeschlossen ist (Fig. 1-4).

30. Einspuriges Zweirad nach einem der Ansprüche 1-29, dadurch gekennzeichnet, daß über die Pedale (20) eine koaxial zur Schwenkachse (0) verlaufende Welle (50) angetrieben wird, die an ihrem oberen Ende eine Kupplung aufweist, so daß über mindestens eine weitere Kardanwelle das Vorderrad (11) und/oder das Hinterrad (10) angetrieben wird.

31. Einspuriges Zweirad nach einem der Ansprüche 4-30, dadurch gekennzeichnet, daß sich der Antrieb (40-50) unterhalb des Drehgelenks (1-4) befindet.

32. Einspuriges Zweirad nach einem der Ansprüche 9-31, dadurch gekennzeichnet, daß sich der Antrieb (40-50) zwischen dem oberen Drehgelenk (1,2) und dem unteren Drehgelenk (3,4) befindet.

33. Einspuriges Zweirad nach einem der Ansprüche 9-32, dadurch gekennzeichnet, daß sich ein Elektromotor (43,44) und Elektrospeicherzellen (404) innerhalb eines Hohlprofils (414) befinden, das das obere Drehgelenk (1,2) und das untere Drehgelenk (3,4) miteinander verbindet.

34. Einspuriges Zweirad nach einem der Ansprüche 4-33, dadurch gekennzeichnet, daß am oberen Ende der Gelenkanordnung eine verschließbare Steckdose (406) für den Anschluß eines Ladegerätes angeordnet ist (Fig. 30).

35. Einspuriges Zweirad nach einem der Ansprüche 1-34, dadurch gekennzeichnet, daß mindestens eine Feige oder eine Radscheibe (12,13) als Behälter zur Aufnahme von Elektrospeicherzellen (403,404) dient.

36. Einspuriges Zweirad nach einem der Ansprüche 1-35, dadurch gekennzeichnet, daß der Antrieb über mindestens einen Radnabenmotor (47,48) erfolgt (Fig. 30,31,32).

37. Einspuriges Zweirad nach einem der Ansprüche 1-36, dadurch gekennzeichnet, daß die Räder als Scheiben (12,13) mit integrierten Photovoltaikzellen (401,402) ausgebildet sind (Fig. 32).

38. Einspuriges Zweirad nach einem der Ansprüche 1-37, dadurch gekennzeichnet, daß die hintere Einheit zu einer geschlossenen Fahrerkabine (70) ausgebildet ist (Fig. 24).

39. Einspuriges Zweirad nach einem der Ansprüche 4-38, dadurch gekennzeichnet, daß eine Wegfahrsperre das Drehgelenk (1-4) blockiert.

40. Einspuriges Zweirad nach einem der Ansprüche 4-39, dadurch gekennzeichnet, daß der Antrieb entweder über eine Tretkurbel (40), einen Elektromotor (43,44) oder einen Verbrennungsmotor (45,46) erfolgt.

41. Einspuriges Zweirad nach einem der Ansprüche 4-40, dadurch gekennzeichnet, daß der Antrieb (40-50) auf das Vorderrad (11) und/oder auf das Hinterrad (10) einwirkt.

42. Einspuriges Zweirad nach einem der Ansprüche 4-41, dadurch gekennzeichnet, daß zwischen der vorderen Radaufhängung (31,33,35,37) und der hinteren Radaufhängung (30,32,34,36) ein innerhalb oder außerhalb der Gelenkanordnung liegender Lenkungsdämper vorgesehen ist.

## Claims

1. Single track two-wheeled vehicle, especially a bicycle, electrical bicycle, electrical roller, motor roller or motorcycle, consisting of a front part and a rear part, both beeing connected with a swivel axis (0) swivelling, whereas the front part is gripping a front wheel hanging (31,33,35,37) with the front wheel (11), a steering gear (21) being displaced to the front opposite the guidance arrangement (1-4), as well as a connecting element (21') of the steering gear; the rear part embracing a rear wheel hanging (30,32,34,36), and a saddle-support (26') carrying the saddle (26), and a compulsion unit (40-50) is being foreseen belonging either to the front part or the rear part.
**characterized by the fact that**
the hinge-arrangement (1-4) is approximately centering the front and rear wheel (11,10), and that the front wheel hanging (31,33,35,37), the steering gear (21), and the connecting element (21') form a first unit untwistable by itself, reacting on a superior gear level (a) at the front unto the swivel axis (0); that the rear wheel hanging (30,32,34,36) and the saddle support (26') forming a second untwistable unit impacting on the swivel axis (0) of the hinge-arrangement (1-4) together with an upper gear level (b) from behind and a basic gear level (c) being constructed as pedal (20) or a fix foot-rest (22).

2. Single track two-wheeled vehicle according to title 1, caracterized by the fact as the driving unit is mounted to the rear part and the bottom bracket bearings (42) is gripping the turning pedals (20) mounted hereto, and that the bottom bracket bearings be positioned coaxially or displaced opposite the swivel axis (0) of the hinge arrangement.

3. Single track two-wheeled vehicle according to title 1, caracterized by the fact as the second unit grips a stable foot-rest (22) instead of the pedals (20) being positioned coaxially or displaced opposite the swivel axis (0).

4. Single track two-wheeled vehicle according to one of the titles 1-3, caracterized by the fact as the front unit and the rear unit in the swivel axis (0) are combined over at least one of the rotary hinges (1-4).

5. Single track two-wheeled vehicle according to title 4, caracterized by the fact as the swivel axis (0) is positioned diagonal to the road way when in resting position.

6. Single track two-wheeled vehicle according to title 4, caracterized by the fact as the swivel axis (0) when in resting position being declined toward the front or the rear diagonally, and having an intersection with the run-way amidst the running surfaces of the front wheel (11) and the rear wheel (10).

7. Single track two-wheeled vehicle according to one of the titles 4-6, caracterized by the fact as the swivelling-link (1,2) being positioned at the level of the wheel axis or above the wheel axis.

8. Single track two-wheeled vehicle according to one of the titles 4-6, caracterized by the fact as the swivel (3-4) lies underneath the wheel axis.

9. Single track two-wheeled vehicle according to title 4, caracterized by the fact as a swivel (1,2) lies above the wheel-axis and a swivel.

10. Single track two-wheeled vehicle according to title 1-9, caracterized by the fact as the steering-gear (21), the front-wheel suspension (31,33,35,37), the saddle-support (26'), the rear-wheel suspension (30,32,34,36) and the pedals (20) resp. the foot-rest (22) being connected directly to a central guide-tube.

11. Single track two-wheeled vehicle according to one of the titles 4-10, caracterized by the fact as the swivel-link (1-4) consists of one guide-tube being combined to one of the two units untwistable, whereas it is being in connection with an upper and a lower cylinder.

12. Single track two-wheeled vehicle according to one of the titles 4-11, caracterized by the fact as the swivel-link (1-4) being constructed in form of a disc, and the front unit and the rear unit being combined with each other over an annual cylinder.

13. Single track two-wheeled vehicle according to one of the titles 1-12, caracterized by the fact as the front unit and the rear unit of the link-arrangement can be hinged together.

14. Single track two-wheeled vehicle according to one of the titles 4-13, caracterized by the fact as the front unit and the rear unit attack at the swivel-link (1-4) in displaced position in the level displaced opposite.

15. Single track two-wheeled vehicle according to one of the titles 4-14, caracterized by the fact as each the front unit and the rear unit attack at the hinge arrangement with a lateral backfilling.

16. Single track two-wheeled vehicle according to one of the titles 1-15, with the front-wheel suspension (31,33,35,37) and the rear suspension (30,32,34,36) constructed with each a tube-frame with a intersection, caracterized by the fact as the intersections (71,72) of the tube-frame are constructed as swivel-links, and the rear unit is hingeable to a compact bundle by losening of an intersection (73,74) in the binge arrangement.

17. Single track two-wheeled vehicle according to one of the titles 9-16, caracterized by the fact as the upper swivel-link (1,2) and the lower swivel-link (3,4) are combined directly with an element of one or more parts.

18. Single track two-wheeled vehicle according to one of the titles 9-17, caracterized by the fact as there is no connection between the upper swivel-link (1,2) and the lower swivel-link (3,4).

19. Single track two-wheeled vehicle according to one of the titles 4-18, caracterized by the fact as a spring-element (60,61) is arranged over the swivel-link (1-4) coaxial to its axis (0).

20. Single track two-wheeled vehicle according to one of the titles 1-19, caracterized by the fact as the conducting bar (21) is combined with the front wheel-suspension (31,33,35) over a swivel-link and over a spring-element (61; fig. 24).

21. Single track two-wheeled vehicle according to one of the titles 1-20, caracterized by the fact as the saddle-support (26') is combined over a swivel-link and over a spring-element (60; fig. 7) to the rear wheel-suspension (30,32,34).

22. Single track two-wheeled vehicle according to one of the titles 4-21, caracterized by the fact as the front unit and/or the rear unit is connected to the swivel-link (1-4) over an elastic combination.

23. Single track two-wheeled vehicle according to one of the titles 4-22, caracterized by the fact as a spring-unit (61; fig. 31) is positioned between the upper swivel-link (1,2) and the lower swivel-link (3,4).

24. Single track two-wheeled vehicle according to one of the titles 1-23, caracterized by the fact as the front wheel-suspension (37; fig. 15, 30) and the rear wheel-suspensioon (36) are constructed as spring-elements.

25. Single track two-wheeled vehicle according to one of the titles 1-24, caracterized by the fact that at least the front wheel-suspension (31,33,35,37) or the rear wheel-suspension (30,32,34,36) are constructed as tube frame.

26. Single track two-wheeled vehicle according to one of the titles 1-25, caracterized by the fact that as least the front wheel-suspension (33) or the rear wheel-suspension (32) is constructed as self-supporting shell-construction.

27. Single track two-wheeled vehicle according to one of the titles 1-26, caracterized by the fact that at least the front wheel-suspension (31) or the rear wheel-suspension (32) are constructed as a fork.

28. Single track two-wheeled vehicle according to one of the titles 1-27, caracterized by the fact that at least the front wheel-suspension (35) or the rear wheel-suspension (34) are constructed as one-arm wing.

29. Single track two-wheeled vehicle according to one of the titles 1-28, caracterized by the fact that at least the front wheel-suspension (31,33,35,37) or the rear wheel-suspension (30,32,34,36) is connected (fig. 1-4) to the front wheel toward the wheel axis by means of a backfilling upward, sideward, downword.

30. Single track two-wheeled vehicle according to one of the titles 1-29, caracterized by the fact that over the pedals (20) is positioned a shaft (50) is driven coaxial to the swivel axis (0), showing a clutch at the upper end so that at least the front wheel (11) and/or the rear wheel (10) is effected over another drive shaft.

31. Single track two-wheeled vehicle according to one of the titles 4-30, caracterized by the fact as the drive (40-50) is positioned on the lower part of the swivel-link (1-4).

32. Single track two-wheeled vehicle according to one of the titles 9-31, caracterized by the fact as the drive (40-50) is positioned between the upper swivel-link (1,2) and the lower swivel-link (3,4).

33. Single track two-wheeled vehicle according to one of the titles 9-32, caracterized by the fact as there is an electrical motor (43,44) and electrical storage-cells (404) within a hollow profile (414) combining the upper swivel-link (1,2) with the lower swivel-link (3,4).

34. Single track two-wheeled vehicle according to one of the titles 9-33, caracterized by the fact as there is a plug socket (406) at the upper end of the link arrangement for connecting a battery charger (fig. 30).

35. Single track two-wheeled vehicle according to one of the titles 1-34, caracterized by the fact that at least a rim or a wheel-disc (12,13) serve as container for the collection of electric storage-cells (403,404).

36. Single track two-wheeled vehicle according to one of the titles 1-35, caracterized by the fact as the drive (fig. 30,31,32) is effected by at least one of the wheel-hubs (47,48).

37. Single track two-wheeled vehicle according to one of the titles 1-36, caracterized by the fact as the wheels (fig. 32) are constructed as discs (12,13) with photovoltaik cells (401,402).

38. Single track two-wheeled vehicle according to one of the titles 1-37, caracterized by the fact as the rear unit (fig. 24) is formed to a closed driver-cabin (70).

39. Single track two-wheeled vehicle according to one of the titles 4-38, caracterized by the fact as a driving blockage effects the swivel-link (1-4).

40. Single track two-wheeled vehicle according to one of the titles 4-39, caracterized by the fact as the drive is effectif either by a foot padel (40),an electric motor (43,44) or an internal combustion engine (45,46).

41. Single track two-wheeled vehicle according to one of the titles 4-40, caracterized by the fact as the drive (40,50) impacts on the front wheel (11) and/or the rear wheel (10).

42. Single track two-wheeled vehicle according to one of the titles 4-41, caracterized by the fact as between the front wheel-suspension (31,33,35,37) and the rear wheel-suspension (30,32,34,36) a rotary stabilizer either interior or exterior the link arrangement is foreseen.

## Revendications

1. Deux roues à voie unique, spécialement une bicyclette, bicyclette électrique, scooter électrique, scooter à moteur ou scooter, existant d'un élément avant et arrière, tous les deux étant combinés avec un pivot (0) basculant, pendant que la partie en tête tenant embrassée la suspension de la voie en tête (31,33,35,37) avec la voie en avant (11), une barre conductrice (21) étant déplacée en avant à l'opposition de l'arrangement de conduction (1-4), ainsi que l'élément combiné de la barre conductrice (21'); la dernière partie embraçant la suspension de la roue arrière (30,32,34,36), et un support de la selle (26') portant la selle (26), avec un élément de compulsion (40-50) étant prévu, qui appartient à la partie en tête ou arrière,
**caractérisé du fait que**
l'arrangement de condition (1-4) se trouve plus au moins centré entre l'avant-roue et l'arrière-roue (11,10), et que la suspension de la roue en tête (31,33,35,37), la barre condustrice (21), et l'élément de connection (21') forment une première unité indétournable en soit-même, réactionnant sur un levier supérieur (a) et la tête dans le pivot (0); que la suspension de la voie arrière (30,32,34,36) et la selle supportante (26') formant une seconde unité indétournable effectant le pivot (0) de l'arrangement de condition (1-4) ensemble avec un levier supérieur (b) de l'arrière et un levier de base (c) étant construit comme pedale (20) ou un répose-pied raide (22).

2. Deux roues à voie unique selon titre 1, caractérisé du fait que l'unité de commade soit montée à l'arrière-partie et le palier du pédalier (42) saisit le pédal (20) y monté, et que le palier du pédalier soit positionné coaxial ou deplacé opposite le pivot basculant (0) de l'arrangement de jointure.

3. Deux roues à voie unique selon titre 1, caractérisé du fait que la seconde unité saisit un repose-pied fixé (22) au lieu des pédales (20) positionnés coaxial ou dèsplacés opposite le pivot basculant (0).

4. Deux roues à voie unique selon un des titres 1-3, caractérisé du fait que l'unité tête et l'unité bout dans le pivot basculant (0) soint combinées dans au moins sur un des jointures tournantes (1-4).

5. Deux roues à voie unique selon titre 4, caractérisé du fait que le pivot basculant (0) est positionné diagonal à la piste en position reposante.

6. Deux roues à voie unique selon titre 4, caractérisé du fait que le pivot basculant (0) en position reposante étant déclinée en avant ou en arrière diagonal, avec une intersection avec la piste au centre de la surface de roulement de la voie avant (11) et la voie derrière (10).

7. Deux roues à voie unique selon un des titres 4-6, caractérisé du fait que l'articulation cylindrique (1,2) soit positionnée au niveau de l'essieu de la roue ou audessus l'essieu des roues.

8. Deux roues à voie unique selon un des titres 4-6, caractérisé du fait que le pivot basculant (3-4) soit positionné au-dessous l'essieu de roue.

9. Deux roues à voie unique selon titre 4, caractérisé du fait que le pivot (1,2) soit positionné au-dessus l'essieu de roue et un autre (3,4) au-dessous l'essieu de roue.

10. Deux roues à voie unique selon un des litres 1-9, caractérisé du fait que le guidon (21), la suspension de la roue avant (31,33,35,37), le support de la selle (26'), la suspension de la roue arrière (30,32,34,36) et les pédales (20) resp. le repose-pied (22) sont connectés directement à une tube directrice, qui définit le pivot basculant (0).

11. Deux roues à voie unique selon un des titres 4-10, caractérisé du fait que l'articulation cylindrique (1-4) consiste d'une tube directrice (6; fig. 8,10,12), étant liée avec une des unité indétournable, pendant qu'il est en liaison avec la deuxième unité sur un palier à roulement supérieur et inférieur.

12. Deux roues à voie unique selon un des titres 4-11, caractérisé du fait que l'articulation cylindrique (1-4) soit construite en disque, et l'unité tête et l'unité arrière soit liées par moyen d'une articulation cylindrique annulaire.

13. Deux roues à voie unique selon un des titres 1-12, caractérisé du fait que l'unitétête et l'unité arrière soient pliant dans l'arrangements de jointure.

14. Deux roues à voie unique selon un des titres 4-13, caractérisé du fait que l'unité tête et l'unité arrière attaquent l'arrangement de jointure (1-4) au niveau déplacé l'une envers l'autre.

15. Deux roues à voie unique selon un des titres 4-14, caractérisé du fait que l'unité tête et l'unité arrière attaquent l'arrangement de jointure chacune avec un déport latéral.

16. Deux roues à voie unique selon un des titres 1-15, la supension de roue-tête (31,33,35,37) et la suspension de roue en arrière (30,32,34,36) construite chacune par un châssis tubulaire avec des intersections, caractérisé du fait que les intersections (71,72) du châssis tubulaire sont construits comme articulation cylindrique, et l'unité arrière est pliable en paquet dans l'arrangement de jointure par dénouer une intersection (73,74).

17. Deux roues à voie unique selon un des titres 9-16, caractérisé du fait que l'articulation cylindrique supérieure (1,2) et l'articulation cylindrique inférieur (3,4) soinent liées directement avec un élément (5) à une pièce ou à plusieures pièces.

18. Deux roues à voie unique selon un des titres 9-17, caractérisé du fait qu'il n'y existe aucune combinaison entre l'articulation cylindrique supérieure (1,2) et l'articulation inférieure (3,4).

19. Deux roues à voie unique selon un des titres 4-18, caractérisé du fait que l'arrangement d'un élément de ressort (60,61) au-dessus l'articulation cylindrique (1-4) coaxial à son essieu (0) soit fait.

20. Deux roues à voie unique selon un des titres 1-19, caractérisé du fait que le guidon (21) soit lié avec la suspension de la roue tête (31,33,35) sur une articulation cylindrique et un élément à ressort (61; fig. 24).

21. Deux roues à voie unique selon un des titres 1-20, caractérisé du fait que le support de la selle (26') est combiné avec la suspension de la roue arrière (30,32,34) sur une articulation cylindrique et un élément à ressort (60; fig. 7).

22. Deux roues à voie unique selon un des titres 4-21, caractérisé du fait que l'unité tête et/ou l'unité amère soit liée à l'articulation cylindrique (1-4) sur une liaison élastique.

23. Deux roues à voie unique selon un des titres 4-22, caractérisé du fait que l'élément à ressort (61; fig. 31) est positionné entre l'articulation cylindrique supérieure (1,2) et l'articulation cylindrique inférieure (3,4).

24. Deux roues à voie unique selon un des titres 1-23, caractérisé du fait que la suspension de roue en tête (37; fig. 15,30) et la suspension de roue arrière (36) soient construites comme des éléments à ressort.

25. Deux roues à voie unique selon un des titres 1-24, caractérisé du fait que la suspension de roue en tête (31,33,35,37) au moins ou la suspension arrière (30,32,34,36) soint construite en châssis tubulaire.

26. Deux roues à voie unique selon un des titres 1-25, caractérisé du fait que la suspension de roue en tête (33) au moins ou la suspension de roue arrière (32) est construit à l'équelle.

27. Deux roues à voie unique selon un des titres 1-26,caractérisé du fait que la suspension en tête (31) au moins ou la suspension arrière (32) soit construite en forge.

28. Deux roues à voie unique selon un des titres 1-27, caractérisé du fait qu'au moins la suspension de roue en tête (35) ou la suspension de roue arrière (34) soit construite comme aile unibras.

29. Deux roues à voie unique selon un des titres 1-28, caractérisé du fait qu'au moins la suspension de roue-tête (31,33,35,37) ou la dernière suspension de roue (30,32,34,36) est connectée (fig. 1-4) vers le haut, le côté ou en bas vers l'essieu de la roue (11) resp. la roue arrière (10).

30. Deux roues à-voie unique selon un des titres 1-29, caractérisé du fait qu'une lame (50) coaxiale à l'essieu basculant (0) soit effectée par les pédales (20) montrant un embrayage au bout supérieur, ainsi que la roue-tête (11) et/ou la roue arrière (10) soit effectuée par une autre arbre cardan.

31. Deux roues à-voie unique selon un des titres 4-30, caractérisé du fait que la commande (40-50) est positionné au-dessous de l'articulation cylindrique (1-4).

32. Deux roues à-voie unique selon un des titres 9-31, caractérisé du fait que la commande (40-50) est positionné entre l'articulation cylindrique supérieure (1,2) et l'articulation cylindrique en bas (3,4).

33. Deux roues à-voie unique selon un des titres 9-32, caractérisé du fait qu'il se trouvent un moteur électrique (43,44) et des cellules électriques d'accumulation (404) au centre d'un profil creux (414), combinant l'articulation cylindrique supérieur (1,2) avec l'articulation cylindrique en bas (3,4).

34. Deux roues à-voie unique selonun des titres 9-33, caractérisé du fait qu'il se trouve une prise de courrant fermable (406) au bout supérieure de l'articulation cylindrique pour la connection d'un chargeur de batteries (fig. 30).

35. Deux roues à voie unique selon un des titres 1-34, caractérisé du fait qu'au moins une jante ou un disque de roue (12,13) serve de boîte à accueillir des cellules électriques d'accumulation (403,404).

36. Deux roues à voie unique selon un des titres 1-35, caractérisé du fait que la commande soit effectuée (fig. 30,31,32) au moins sur un moteur au moyen de roue (47,48).

37. Deux roues à voie unique selon un des titres 1-36, caractérisé du fait que les roues soient construites (fig. 32) comme disques (12,13) avec des cellules photovoltaik (401,402).

38. Deux roues à voie unique selon un des titres 1-37, caractérisé du fait que l'unité arrière soit construite (fig. 24) comme cabine conductrice (70) fermée.

39. Deux roues à voie unique selon un des titres 4-38, caractérisé du fait qu'un barrage bloque l'articulation cylindrique (1-4).

40. Deux roues à voie unique selon un des titres 4-39, caractérisé du fait que la commande soit effectuée sur une pédale (40), un moteur électrique (43,44) ou un moteur à combustion (45,46).

41. Deux roues à voie unique selon un des titres 4-40, caractérisé du fait que la commande (40,50) effectue la roue-tête (11) et/ou la roue en arrière (10).

42. Deux roues à voie unique selon un des litres 4-41, caractérisé du fait qu'il est prévu un amortisseur de guidage entre la suspension de roue avant (31,33,35,37) et la suspension de roue arrière (30,32,34,36) dans l'intérieur ou l'extérieur de l'arrangement de jointure.
